# FASCICULE DE BREVET EUROPEEN

(11) **EP 3 465 423 B1**
(45) Date de publication et mention de la délivrance du brevet: **28.06.2023**
(21) Numéro de dépôt: 17729525.0
(22) Date de dépôt: 22.05.2017
(51) Int. Cl.: G06F 8/75, G06F 9/455

(54) **PROCÉDÉ D'IDENTIFICATION D'AU MOINS UNE FONCTION D'UN NOYAU D'UN SYSTÈME D'EXPLOITATION**
VERFAHREN ZUR IDENTIFIZIERUNG MINDESTENS EINES BETRIEBSSYSTEMS KERNEL FUNKTION
METHOD FOR IDENTIFYING AT LEAST ONE OPERATING SYSTEM KERNEL FUNCTION

(30) Priorité: 24.05.2016 FR 1654654
(43) Date de publication de la demande: 10.04.2019
(73) Titulaire: Orange, 92130 Issy-les-Moulineaux (FR)
(72) Inventeur: HEBBAL, Yacine, 14000 CAEN (FR); LANIEPCE, Sylvie, 14000 CAEN (FR)
(74) Mandataire: Cabinet Beau de Loménie
(86) Numéro de dépôt international: PCT/FR2017/051255
(87) Numéro de publication internationale: WO 2017/203147

(56) Documents cités:
- WO-A1-2015/117013
- US-A1- 2005 028 002
- GU ZHONGSHU ET AL: "FACE-CHANGE: Application-Driven Dynamic Kernel View Switching in a Virtual Machine", 2014 44TH ANNUAL IEEE/IFIP INTERNATIONAL CONFERENCE ON DEPENDABLE SYSTEMS AND NETWORKS, IEEE, 23 juin 2014 (2014-06-23), pages 491-502, XP032646930, DOI: 10.1109/DSN.2014.52

## Description

La présente invention concerne un procédé d'identification des fonctions d'un noyau d'un système d'exploitation d'une machine virtuelle dans un environnement informatique virtualisé.

Elle trouve une application particulièrement intéressante dans la supervision de systèmes informatiques dont l'architecture est basée sur des ressources informatiques dématérialisées. Une telle architecture est plus connue sous le nom d'architecture en « cloud computing », ou architecture « d'informatique dans le nuage ». La supervision peut avantageusement être appliquée pour sécuriser les machines virtuelles de l'architecture, notamment pour détecter des comportements malicieux et le cas échéant réagir.

Une architecture en cloud computing comprend habituellement au moins un serveur hôte qui possède des ressources matérielles, telles que de la mémoire, un micro-processeur, une interface réseau, etc., sur lesquelles s'appuie un service en cloud computing offert par un fournisseur de services à un ou des clients. Le fournisseur de services met ainsi à disposition du client une ou des machines virtuelles qui constituent l'environnement d'exécution du service propre au client et qui utilisent les ressources du serveur hôte pour s'exécuter. Une couche de virtualisation située entre les ressources matérielles du serveur hôte et les machines virtuelles est adaptée pour présenter à un ou des systèmes d'exploitation des machines virtuelles un espace de ressources virtuelles, construit à partir de l'espace des ressources matérielles du serveur hôte. Cette couche est mise en oeuvre par un module de virtualisation appelé habituellement « hyperviseur » qui gère l'allocation des ressources matérielles entre les différentes machines virtuelles, et qui met à disposition des machines virtuelles ces ressources virtualisées. Les machines virtuelles sont par exemple des machines virtuelles de clients qui peuvent comprendre des données ou du code sensibles à protéger et pour lesquelles il y a un besoin de supervision de la sécurité.

Dans le cadre du cloud computing, plusieurs approches ont été proposées afin d'analyser le comportement de machines virtuelles dans le but de détecter et/ou pallier des problèmes de sécurité. Une approche qui a vu le jour en 2003 a proposé de se placer au niveau de la couche de virtualisation de l'environnement, c'est-à-dire de l'hyperviseur, afin de superviser l'utilisation des ressources par les machines virtuelles et de détecter à ce niveau d'éventuels problèmes de sécurité. Une telle approche présente plusieurs avantages. Elle se place en dehors de la machine virtuelle, l'hyperviseur étant complètement isolé des machines virtuelles ; il est donc hors de portée d'un attaquant qui aurait pris le contrôle d'une ou de plusieurs machines virtuelles. Par ailleurs, elle permet d'avoir une visibilité complète de l'architecture puisqu'elle offre une visibilité de l'utilisation des ressources matérielles par l'ensemble des machines virtuelles. Une telle méthode est connue sous le nom de « méthode d'introspection de machines virtuelles ». Cependant, une difficulté connue de cette méthode est d'interpréter les informations observées au niveau de l'hyperviseur. En effet, les informations observables à ce niveau sont des informations bas niveau, ou données brutes (on parle de « raw data » en anglais), typiquement des 0 et des 1, qu'il est nécessaire d'interpréter. Notamment, il est nécessaire, à partir de ces données brutes d'obtenir une sémantique au niveau d'une machine virtuelle afin de qualifier une activité sur cette machine, comme par exemple l'exécution d'un programme ou d'un processus, l'accès à un fichier, l'exécution d'un virus, etc. Cette différence entre des données brutes et leur interprétation en tant qu'activité clairement identifiée sur une machine virtuelle est qualifiée de fossé sémantique (ou « semantic gap » en anglais). Dès lors que le fossé sémantique est franchi, l'hyperviseur devient intelligent dans le sens où il lui est possible de superviser l'exécution de l'ensemble des machines virtuelles, d'analyser leur comportement et d'agir le cas échéant.

Différents travaux visant à combler ce fossé sémantique ont été présentés.

Ces travaux se concentrent sur la supervision des fonctions du noyau (ou « kernel » en anglais) du système d'exploitation des machines virtuelles. En effet, comprendre le fonctionnement d'une machine virtuelle passe par la compréhension des fonctions du noyau. Le noyau regroupe toutes les opérations vitales de la machine : c'est la partie du système d'exploitation qui gère l'accès aux ressources de la machine. Pour superviser une machine virtuelle depuis l'hyperviseur il est donc nécessaire de pouvoir observer, intercepter voire appeler, depuis l'hyperviseur, les fonctions du noyau du système d'exploitation.

Pour ce faire, une première méthode connue propose d'identifier, lors de l'exécution d'une machine virtuelle, des appels système (ou « system call » en anglais, ou « syscall » en abrégé). Un appel système permet de communiquer directement avec le noyau du système d'exploitation de la machine virtuelle. Par exemple, pour écrire sur le disque dur, un programme de l'espace utilisateur doit passer par des appels système qui contrôlent les écritures sur le disque commandées depuis le programme. Les appels système garantissent la sécurité des données et leur intégrité sur le disque en contrôlant les applications de l'espace utilisateur.

Les appels système commencent et terminent par des instructions identifiées, en l'espèce « syscall », « sysret » et « sysexit ». Il est donc possible de notifier l'hyperviseur à chaque fois que l'instruction « syscall » est rencontrée lors de l'exécution de la machine virtuelle et de contrôler aussi de la même façon la fin d'un l'appel système. Une fois alerté, il est possible pour l'hyperviseur d'interrompre l'exécution de la machine virtuelle et de la reprendre. Cependant, cette méthode n'offre qu'une vue limitée de la machine virtuelle : les appels système ne constituent qu'une infime partie des fonctions du noyau du système d'exploitation. Sur à peu près 26000 fonctions que compte le noyau d'un système d'exploitation, à peu près 360 seulement correspondent à des appels système. En effet, hormis les appels système, il existe également de nombreuses autres fonctions internes du noyau auxquelles font appel les appels système. Par exemple, il existe des fonctions internes du noyau qui permettent d'agir sur l'ordonnanceur d'un système d'exploitation, en supprimant par exemple un processus, un utilisateur, en interceptant toutes les données qui transitent par le clavier, etc. Si ces fonctions font l'objet d'une attaque les conséquences sur le fonctionnement de la machine virtuelle peuvent être catastrophiques. Ces fonctions internes commencent par des instructions qu'il n'est pas facile d'identifier. Ainsi, cette méthode ne permet qu'une supervision d'un ensemble limité de fonctions du noyau du système d'exploitation d'une machine virtuelle. Par ailleurs, les machines virtuelles doivent nécessairement être en cours d'exécution pour détecter les appels système et identifier ainsi les fonctions du noyau concernées.

Le document "FACE-CHANGE: Application-Driven Dynamic Kernel View Switching in a Virtual Machine", 2014 44TH ANNUAL IEEE/IFIP INTERNATIONAL CONFERENCE ON DEPENDABLE SYSTEMS AND NETWORKS, IEEE, 23 juin 2014 (2014-06-23), pages 491-502, de Gu et al décrit une méthode permettant de superviser l'exécution du système au niveau bloc lors d'une interaction avec une application.

Une autre technique connue propose de superviser l'exécution de fonctions du noyau par configuration. Tous les systèmes d'exploitation et versions de système d'exploitation sont en effet documentés. Ainsi, les adresses de toutes les fonctions du noyau sont accessibles dans des documents techniques. Il est alors possible de positionner des points de contrôle dans le code d'une machine virtuelle afin d'être notifié, lors de l'exécution de la machine virtuelle, de l'exécution d'une fonction, de déclencher une action. Cependant, chaque système d'exploitation, voire chaque version de système d'exploitation possède sa propre documentation. Il est donc nécessaire d'avoir autant de configurations que de systèmes d'exploitation possibles. En outre un fournisseur d'architecture cloud peut ne pas avoir la connaissance a priori du système d'exploitation des machines virtuelles que l'architecture héberge. C'est le cas d'une architecture de type « IaaS » (de l'anglais « Infrastructure as a Service »), dans laquelle un client configure sa machine virtuelle jusqu'au système d'exploitation qu'il installe lui-même.

Ainsi, il n'existe pas de méthode satisfaisante permettant de superviser l'ensemble des fonctions du noyau d'un système d'exploitation d'une machine virtuelle qui ne soit pas liée à un système d'exploitation particulier.

Un des buts de l'invention est de remédier à des insuffisances/inconvénients de l'état de la technique et/ou d'y apporter des améliorations.

A cette fin, l'invention propose un procédé d'identification d'au moins une fonction d'un noyau d'un système d'exploitation d'une machine virtuelle, ladite machine virtuelle comprenant un système d'exploitation communiquant avec un hyperviseur d'un système hôte, ledit hyperviseur s'interfaçant entre le système d'exploitation et des ressources matérielles du système hôte, ledit procédé comprenant les étapes suivantes :
- identification d'une instruction initiale comprise dans le code du noyau du système d'exploitation de la machine virtuelle,
- localisation en scannant l'espace mémoire d'au moins un bloc d'instructions suivant appartenant à au moins une fonction du noyau du système d'exploitation de la machine virtuelle, ledit bloc suivant étant situé dans une zone mémoire qui suit l'instruction initiale,
- localisation en scannant l'espace mémoire et en utilisant un mécanisme d'auto-réparation de désassemblage, d'au moins un bloc d'instructions précédent appartenant à au moins une fonction du noyau du système d'exploitation de la machine virtuelle, ledit bloc précédent étant situé dans une zone mémoire qui précède l'instruction initiale,
- identification d'un premier bloc et d'un dernier bloc d'instructions de la fonction du noyau du système d'exploitation parmi les au moins un bloc suivant et au moins un bloc précédent, ladite identification consistant à chercher dans une base de données de référence comprenant l'ensemble des signatures des blocs d'instructions des fonctions du noyau du système d'exploitation, une signature de bloc de l'ensemble étant associée au nom d'une fonction du noyau du système d'exploitation, le nom de la fonction associée aux signatures des premier et dernier blocs d'instructions, et enregistrement d'une adresse de début de fonction et d'une adresse de fin de fonction en association avec la fonction du noyau du système d'exploitation, l'adresse de début de fonction étant l'adresse de la première instruction du premier bloc et l'adresse de fin de fonction étant l'adresse de la dernière instruction du dernier bloc.

Le procédé d'identification d'au moins une fonction d'un noyau d'un système d'exploitation d'une machine virtuelle offre une solution pour combler le fossé sémantique qui existe entre des données bas niveau, visibles au niveau de l'hyperviseur et relatives à l'exécution d'une machine virtuelle, et une interprétation de ces données en termes compréhensibles par un être humain. Le procédé permet de construire pour une machine virtuelle qui comprend un système d'exploitation donné une table de fonctions qui associe au nom de la fonction une première adresse en mémoire correspondant au point d'entrée de la fonction et une deuxième adresse qui correspond à un dernier point de sortie de la fonction qui correspond à l'adresse de fin de la fonction. Une telle table constitue une interface haut-niveau d'accès à des données via l'hyperviseur.

Une telle interface offre de très nombreuses possibilités de supervision des fonctions du noyau : d'une part, toutes les fonctions du noyau peuvent être supervisées et pas uniquement les appels système. D'autre part, il est possible de superviser la sortie d'une fonction, par supervision du dernier point de sortie de la fonction et également d'éventuels autres points de la fonction pour lesquels l'hyperviseur souhaite être notifié. Les autres points de sortie sont alors identifiés en scannant les instructions comprises entre la première instruction de la fonction et la dernière instruction. L'hyperviseur peut ainsi accéder à une connaissance très précise du fonctionnement des fonctions.

Le procédé introduit la notion de bloc d'instructions. Une fonction est composée de blocs d'instructions. Une instruction de fin de bloc est facile à identifier et les blocs se suivent en mémoire. Cette notion de bloc rend possible la localisation d'une fonction, délimitée ainsi par un bloc de début et un bloc de fin. Elle permet par ailleurs d'appliquer le procédé à des systèmes d'exploitation pour lesquels des instructions de début de fonction ne sont pas clairement identifiées. C'est le cas par exemple de systèmes d'exploitation optimisés.

Le procédé est mis en oeuvre sans connaissance a priori du système d'exploitation qui tourne sur la machine virtuelle. Il est connu que les fonctions du noyau occupent une zone contigüe en mémoire. Cependant, sans connaissance du système d'exploitation, il est impossible de délimiter la zone mémoire. Le procédé propose donc d'identifier une première instruction, dont on est sûr qu'elle fait partie du code du noyau et de localiser tous les blocs d'instructions en partant de cette instruction.

Le procédé est indépendant des systèmes d'exploitation des machines virtuelles dont on souhaite analyser l'activité. En ce sens il est qualifié de « OS-agnostique ». En effet, les étapes du procédé sont identiques, quel que soit le système d'exploitation. Par ailleurs, le procédé permet d'être exhaustif quant aux fonctions du noyau analysées dans le sens où il propose une cartographie de l'ensemble de la zone mémoire allouée au noyau et identifie les adresses de début et de fin de l'ensemble des fonctions du noyau, qui comprend les appels système et les fonctions internes au noyau.

Le procédé peut être qualifié de sécurisé du fait de son indépendance par rapport aux machines virtuelles qu'il analyse. En effet le procédé est mis en oeuvre au niveau de l'hyperviseur. Cette indépendance ne permet pas à un attaquant qui aurait pris le contrôle d'une machine virtuelle de perturber l'exécution du procédé.

Dans un exemple de réalisation, l'instruction initiale est identifiée en accédant à un registre spécifique du processeur.

Les processeurs référencent des registres spécifiques. De tels registres sont nécessairement dans la zone du noyau du système d'exploitation. Par exemple, dans le cas du processeur x86, le registre « IA32_SYSENTER_EIP » pointe sur la première instruction du gestionnaire des appels système. Ce registre est choisi comme instruction initiale par le procédé.

Dans un exemple de réalisation, la localisation d'au moins un bloc suivant, situé dans la zone mémoire qui suit l'instruction initiale, comprend :
- recherche, dans la zone mémoire qui suit l'instruction initiale, d'une instruction courante qui suit une instruction de fin de bloc, ladite instruction courante étant la première instruction du bloc suivant,
- recherche, dans la zone mémoire qui suit la première instruction du bloc suivant, d'une instruction de fin de bloc suivante, ladite instruction de fin de bloc suivante étant la dernière instruction du bloc suivant.

Les blocs d'instruction qui se trouvent en mémoire après l'instruction initiale sont identifiés au fur et à mesure, jusqu'à la fin de la zone mémoire allouée à l'espace noyau. L'identification des blocs d'instructions consistent à identifier des instructions qui correspondent à des fins de blocs. L'instruction qui suit une fin de bloc est assimilée à une instruction de début de bloc suivant, sauf dans le cas où l'instruction correspond à des octets de bourrage, auquel cas ces octets sont ignorés. Ainsi, les débuts de blocs sont identifiés par leur position par rapport à une fin de bloc. Une telle identification est adaptée aux systèmes d'exploitation pour lesquels un début de fonction, qui correspond à la première instruction d'un premier bloc n'est pas connue.

Dans un exemple de réalisation, la localisation d'au moins un bloc précédent, situé dans la zone mémoire qui précède l'instruction initiale comprend :
- recherche, dans la zone mémoire qui précède l'instruction initiale, d'au moins deux instructions de fin de bloc, une première instruction de fin de bloc étant située à une première adresse, une deuxième instruction de fin de bloc étant située à une deuxième adresse, la première adresse étant plus éloignée de l'instruction initiale que la deuxième adresse,
- mise en oeuvre d'un désassemblage sur des instructions qui suivent la première adresse,
- lorsqu'une instruction obtenue par désassemblage depuis la première adresse et figurant à la deuxième adresse correspond à la deuxième instruction de fin de bloc, sélection de l'instruction qui suit la deuxième instruction de fin de bloc, ladite instruction qui suit la deuxième instruction de fin de bloc correspondant à la première instruction du au moins un bloc précédent,
- recherche dans la zone de mémoire qui suit la première instruction du au moins un bloc précédent d'une autre instruction de fin de bloc, ladite autre instruction de fin de bloc correspondant à la dernière instruction du au moins un bloc précédent.

Une fois l'instruction initiale localisée, il convient de localiser tous les blocs d'instructions qui sont situés dans la zone mémoire allouée au noyau avant cette instruction.

D'une manière générale, il n'est pas simple d'identifier les blocs qui précèdent en mémoire l'instruction initiale. En effet, les instructions d'un processeur, par exemple du processeur x86 ont des tailles variables, d'un à plusieurs octets, et ne sont pas alignées en mémoire. Il est donc difficile de désassembler du code binaire en assembleur en remontant dans la mémoire car on n'est jamais assuré qu'un octet correspond à un début d'instruction, ou s'il correspond à une instruction ou à un opérande. Par ailleurs tout octet, pour le processeur x86 a une signification. Il est donc possible de désassembler le deuxième octet d'une instruction qui en comprend plusieurs et d'obtenir en langage assembleur une instruction qui existe. Pour autant, le code assembleur obtenu ne correspond pas à l'instruction binaire qui commençait à l'octet précédent. Enfin, on ne sait pas où se positionner dans la mémoire pour désassembler le code binaire car on ne sait pas où commence le code du noyau. Le procédé propose une solution pour identifier les blocs d'instructions situés avant l'instruction initiale qui utilise astucieusement le mécanisme d'auto-réparation du désassemblage. Le mécanisme est appliqué à partir d'une première instruction que l'on croit être des instructions de fin de bloc. Le mécanisme d'auto-réparation permet de s'assurer qu'une deuxième instruction, que l'on croit également être une instruction de fin de bloc, correspond réellement à une telle instruction. Une fois une instruction de fin de bloc correcte localisée, l'identification des blocs qui suivent cette fin de bloc se fait de manière classique. Dans un exemple de réalisation, des distances de sécurité sont prises en compte de manière à avoir un nombre minimal d'instructions entre la première et la deuxième instruction de fin de bloc. Une telle distance de sécurité permet d'optimiser les chances d'identifier des blocs et donc les performances du désassemblage.

Avantageusement, l'identification d'un premier bloc et d'un dernier bloc d'instructions de la fonction du noyau comprend :
- calcul pour chacun des au moins un bloc suivant et des au moins un bloc précédent d'une signature des instructions du bloc,
- recherche de ladite signature dans une base de référence de signatures de blocs, ladite base de référence comprenant pour au moins un système d'exploitation de référence, les signatures des instructions des blocs qui font partie des fonctions de référence du noyau dudit système d'exploitation, une signature des instructions d'un bloc de la base étant associée au nom d'au moins une fonction de référence du noyau qui comprend ledit bloc,
- classement des au moins un bloc suivant et des au moins un bloc précédent selon une adresse de bloc, et regroupement de blocs successifs et identification de la fonction du noyau qui comprend ledit regroupement de blocs, un premier bloc du regroupement correspondant au premier bloc de la fonction du noyau et un dernier bloc du regroupement correspondant au dernier bloc de la fonction du noyau.

Une fois les blocs d'instructions localisés dans la zone du noyau, ceux-ci sont regroupés par fonction. Une fonction comprend alors un ensemble de blocs, ordonnés en mémoire. Ce regroupement permet ainsi d'obtenir aisément l'adresse de début de fonction, qui correspond à l'adresse de la première instruction du premier bloc de la fonction. Il permet de la même façon d'obtenir l'adresse de fin de la fonction, qui correspond à l'adresse de la dernière instruction du dernier bloc.

Dans un exemple de réalisation, le procédé d'identification comprend, dans une phase de construction de la base de référence de signatures des blocs qui font partie des fonctions de référence d'au moins un système d'exploitation de référence, les étapes suivantes :
- obtention de l'adresse de début d'une première fonction de référence, l'adresse de début de la première fonction de référence étant associée au nom de la première fonction de référence dans une documentation du système d'exploitation, et obtention dans la documentation de l'adresse de début d'une fonction de référence suivante,
- association d'une adresse mémoire précédent l'adresse de début de la fonction de référence suivante à une adresse de fin de la première fonction de référence,
- identification entre l'adresse de début de la première fonction de référence et de l'adresse de fin de la première fonction de référence d'au moins un bloc d'instructions, la dernière instruction dudit bloc étant une instruction de fin de bloc,
- calcul d'une signature dudit bloc d'instructions identifié,
- enregistrement dans la base de référence de ladite signature du bloc en association avec le nom de la première fonction de référence.

Ces étapes correspondent au peuplement de la base de référence. Elles sont mises en oeuvre dans un environnement d'exécution particulier dans le sens où le système d'exploitation de référence est connu, et que pour ce système d'exploitation, une documentation est utilisée pour initier les étapes de construction de la base. Le peuplement de la base de référence s'appuie donc sur des éléments valides, fournis par un éditeur du système d'exploitation de référence. Cela garantit l'intégrité et l'exhaustivité de la base de référence. Ces deux qualités garantissent donc également la fiabilité du procédé d'identification des fonctions des noyaux des systèmes d'exploitation.

L'invention concerne aussi une utilisation du procédé d'identification d'au moins une fonction d'un noyau par un module de supervision de l'exécution d'une machine virtuelle, ledit module de supervision commandant à l'hyperviseur d'injecter dans la machine virtuelle l'appel de la fonction du noyau identifiée.

L'invention concerne aussi une utilisation du procédé d'identification d'au moins une fonction d'un noyau par un module de supervision de l'exécution d'une machine virtuelle, ledit module de supervision commandant à l'hyperviseur de positionner des bits associés au caractère exécutable de la fonction du noyau identifiée à non exécutable de manière à recevoir une notification lors de l'exécution de ladite fonction par la machine virtuelle.

L'invention porte également sur une utilisation du procédé d'identification d'au moins une fonction d'un noyau par un module de supervision de l'exécution d'une machine virtuelle, ledit module de supervision commandant à l'hyperviseur d'injecter une instruction d'interception d'activité dans le code de la fonction du noyau de manière à recevoir une notification lors de l'exécution de ladite fonction par la machine virtuelle.

Cela constitue un autre exemple d'utilisation du procédé d'identification de fonctions du noyau d'une machine virtuelle dans lequel du code correspondant à des instructions d'interception est injecté dans le code d'une fonction du noyau pour laquelle on souhaite que l'hyperviseur soit notifié lors de son exécution. Il présente l'avantage d'être souple et configurable en permettant de choisir précisément les fonctions du noyau pour lesquelles on souhaite que l'hyperviseur soit notifié, et le type de notification que l'hyperviseur reçoit. Notamment on peut choisir une notification qui interrompt l'exécution de la machine virtuelle ou une notification qui ne l'interrompt pas.

L'invention concerne aussi une utilisation du procédé d'identification d'au moins une fonction d'un noyau par un module de supervision de l'exécution d'une machine virtuelle, ledit module de supervision commandant à l'hyperviseur d'injecter une instruction d'interception d'activité dans le code de la fonction du noyau identifiée de manière à recevoir une notification lors de la fin de l'exécution de ladite fonction par la machine virtuelle.

Dans cet exemple, c'est la fin de l'exécution d'une fonction qui est supervisée afin de notifier l'hyperviseur. Superviser la fin de l'exécution d'une fonction permet de connaître le résultat de la fonction, de le modifier éventuellement, d'ajouter un traitement, etc. Il est possible également d'injecter des instructions d'interception d'activité au niveau d'éventuels autres points de sortie de la fonction pour lesquels l'hyperviseur souhaite être notifié. Dans ce cas, les autres points de sortie sont repérés en scannant les instructions comprises entre la première instruction de la fonction et la dernière instruction. Les possibilités de supervision des fonctions sont donc très nombreuses.

L'invention porte également sur un dispositif d'identification d'au moins une fonction d'un noyau d'un système d'exploitation d'une machine virtuelle, ladite machine virtuelle comprenant un système d'exploitation communiquant avec un hyperviseur du serveur, ledit hyperviseur s'interfaçant entre le système d'exploitation et des ressources matérielles du serveur, ledit serveur comprenant :
- des moyens d'identification d'une instruction initiale, agencés pour identifier une instruction initiale comprise dans le code du noyau du système d'exploitation de la machine virtuelle,
- des premiers moyens de localisation, agencés pour localiser en scannant l'espace mémoire au moins un bloc d'instructions suivant compris dans au moins une fonction du noyau du système d'exploitation de la machine virtuelle, ledit bloc suivant étant situé dans une zone mémoire qui suit l'instruction initiale,
- des deuxièmes moyens de localisation, agencés pour localiser en scannant l'espace mémoire et en utilisant un mécanisme d'auto-réparation du désassemblage, au moins un bloc d'instructions précédent compris dans au moins une fonction du noyau du système d'exploitation de la machine virtuelle, ledit bloc précédent étant situé dans une zone mémoire qui précède l'instruction initiale,
- des moyens d'identification, agencés pour identifier, parmi les au moins un bloc suivant et au moins un bloc précédent, un premier bloc et un dernier bloc d'instructions qui composent la fonction du noyau du système d'exploitation, ladite identification consistant à chercher dans une base de données de référence comprenant l'ensemble des signatures des blocs d'instructions des fonctions du noyau du système d'exploitation, une signature de bloc de l'ensemble étant associée au nom d'une fonction du noyau du système d'exploitation, le nom de la fonction associée aux signatures des premier et dernier blocs d'instructions,
- des moyens d'enregistrement, agencés pour enregistrer une adresse de début de fonction et une adresse de fin de fonction en association avec la fonction du noyau du système d'exploitation, l'adresse de début de fonction étant l'adresse de la première instruction du premier bloc et l'adresse de fin de fonction étant l'adresse de la dernière instruction du dernier bloc.

L'invention porte également sur un programme d'ordinateur sur un support de données et chargeable dans la mémoire d'un ordinateur, le programme comprenant des portions de code pour l'exécution des étapes du procédé d'identification d'au moins une fonction d'un noyau d'un système d'exploitation d'une machine virtuelle tel que décrit précédemment, lorsque le programme est exécuté sur ledit ordinateur.

Enfin l'invention concerne aussi un support de données dans lequel est enregistré le programme ci-dessus.

D'autres caractéristiques et avantages de la présente invention seront mieux compris de la description et des dessins annexés parmi lesquels :
- la figure 1 est une représentation schématique d'un procédé d'identification d'au moins une fonction d'un noyau d'un système d'exploitation d'une machine virtuelle, selon un exemple de réalisation ;
- la figure 2 est une représentation des étapes de la phase d'identification de l'instruction initiale et de localisation des blocs suivants du procédé d'identification, selon un exemple de réalisation ;
- la figure 3 est une représentation des étapes de la phase de localisation des blocs qui précèdent en mémoire l'instruction initiale, selon un exemple de réalisation ;
- le figure 4 est une représentation schématique d'une zone mémoire et illustre le mécanisme mis en oeuvre dans la phase de localisation des blocs qui précèdent en mémoire l'instruction initiale, selon un exemple de réalisation ;
- la figure 5 présente les étapes d'un procédé de construction d'une base de référence de signatures de blocs d'instructions, selon un exemple de réalisation ;
- la figure 6 est une représentation schématique d'un dispositif d'identification d'au moins une fonction d'un noyau d'un système d'exploitation, selon un exemple de réalisation ;
- le figure 7 présente les étapes d'un procédé de supervision de l'exécution d'une machine virtuelle, selon un exemple de réalisation ;
- la figure 8 présente les étapes d'un procédé de supervision de l'exécution d'une machine virtuelle, selon un deuxième exemple de réalisation.

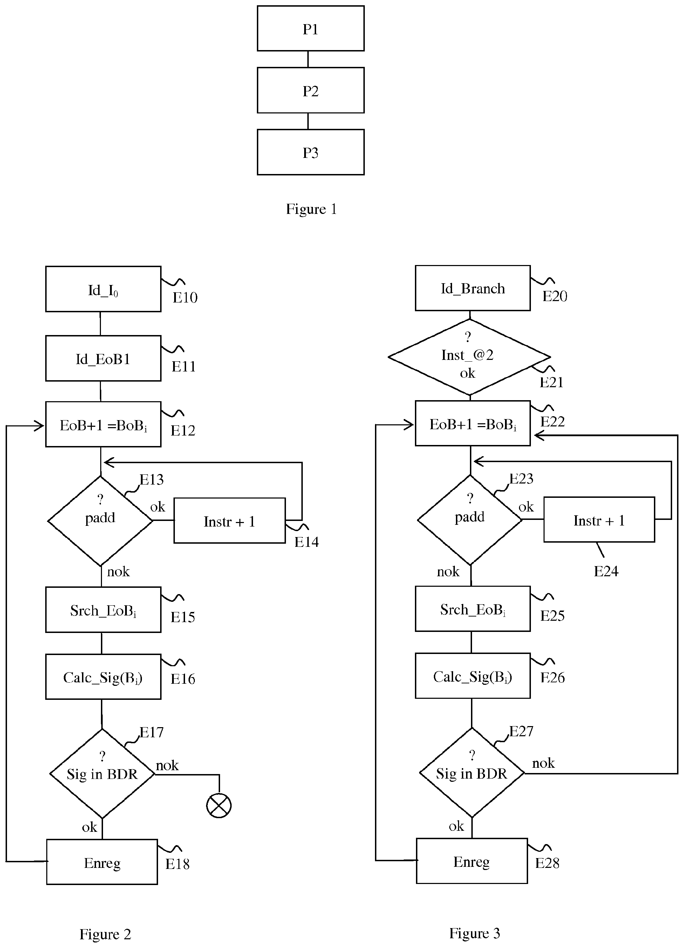

Les étapes d'un procédé d'identification d'au moins une fonction d'un noyau d'un système d'exploitation d'une machine virtuelle, selon un exemple de réalisation, vont maintenant être décrites en relation avec les figures 1 à 4.

Un serveur hôte (non représenté sur les figures 1 à 4) d'une architecture en cloud computing héberge une ou plusieurs machines virtuelles qui ont chacune leur propre système d'exploitation. Une couche de virtualisation du serveur hôte est adaptée pour présenter aux systèmes d'exploitation des machines virtuelles hébergées par le serveur un espace de ressources virtuelles, construit à partir de ressources matérielles du serveur hôte. La couche de virtualisation est mise en oeuvre par un module appelé hyperviseur qui gère l'allocation des ressources matérielles entre les différentes machines virtuelles et qui met à leur disposition les ressources virtualisées. Dans l'exemple de réalisation décrit ici, l'hyperviseur comprend un module d'identification des fonctions du noyau d'un système d'exploitation d'une machine virtuelle. Le module d'identification des fonctions du noyau est un module logiciel qui comprend des instructions de code agencées pour mettre en oeuvre les étapes d'un procédé d'identification des fonctions du noyau. Dans l'exemple décrit ici le processeur du serveur hôte est un processeur x86. Aucune limitation n'est attachée à ce type d'architecture.

Le procédé d'identification d'au moins une fonction d'un noyau d'un système d'exploitation d'une machine virtuelle hébergée par un serveur hôte permet, à partir des informations observables depuis l'hyperviseur du serveur hôte d'identifier, c'est-à-dire connaître et localiser l'ensemble des fonctions du noyau du système d'exploitation de la machine virtuelle. Connaître et localiser les fonctions du noyau d'un système d'exploitation d'une machine virtuelle depuis un hyperviseur est un prérequis pour intercepter et commander l'exécution depuis l'hyperviseur des fonctions du noyau, dans le but de superviser l'exécution de cette machine virtuelle. Une telle supervision permet, tout en étant isolé de cette machine, de détecter et pallier des problèmes de sécurité. Il est admis que les fonctions du noyau sont vitales pour le système d'exploitation et être capable de superviser l'ensemble des fonctions du noyau d'une machine virtuelle permet d'envisager une supervision complète de la sécurité des machines virtuelles.

La localisation des fonctions consiste à obtenir, pour l'ensemble des fonctions du noyau du système d'exploitation une adresse de début, qui correspond à l'adresse de la première instruction de la fonction, et une adresse de fin, qui correspond à l'adresse de la dernière instruction de la fonction. Il n'est pas facile d'identifier et de localiser des fonctions dans un code. En effet, les informations de localisation des fonctions d'un noyau varient d'un système d'exploitation à un autre et d'une version de système à une autre. Certains systèmes d'exploitation, dits non optimisés, prévoient des instructions spécifiques pour délimiter le code des fonctions du noyau. Par exemple, l'instruction « push ebp » suivie de l'instruction « mov ebp, esp » annoncent le début d'une fonction, et une instruction « ret » suivante annonce la fin de la fonction. Cependant pour d'autres systèmes d'exploitation, dits optimisés, par exemple Optimized Kernel Debian 6, les fonctions ne sont pas délimitées par de telles instructions. Typiquement aucune instruction spécifique n'annonce un début de fonction. Un système d'exploitation optimisé occupe moins d'espace mémoire et s'exécute plus rapidement.

Par ailleurs, il est d'autant plus difficile d'obtenir ces informations qu'a priori, on ne dispose d'aucune information quant au système d'exploitation qui s'exécute sur la machine virtuelle que l'on souhaite analyser.

A noter que l'espace mémoire alloué à une machine virtuelle comprend un espace utilisateur et un espace dédié au noyau. L'espace utilisateur comprend le code de chaque application utilisateur et les données de chacune des applications. L'espace noyau comprend un espace dédié au code du noyau et un espace dédié aux données du noyau. Le code du noyau comprend un code principal et des extensions, ajoutées par exemple lors de l'installation d'un driver, etc. Le code du noyau principal comprend les appels système (« system call » en anglais, ou « syscall » en abrégé) qui constituent l'interface API (de l'anglais « Application Programming Interface ») du noyau et qui sont des fonctions qui peuvent être appelées depuis des programmes utilisateur. Le code du noyau comprend également des fonctions internes au noyau. Les fonctions internes ne sont pas accessibles directement depuis les programmes utilisateur. Elles peuvent par contre être appelées par les appels système. Par exemple, si un appel système permet d'allouer une zone mémoire, d'écrire une valeur dans cette zone, des fonctions internes, en charge de la gestion de la mémoire, vont être exécutées. Il est connu que la zone mémoire qui comprend les appels système et les fonctions internes du noyau est une zone contigüe. C'est cette zone mémoire contigüe que le procédé souhaite analyser pour identifier et localiser l'ensemble des fonctions du noyau.

L'étude de différents systèmes d'exploitation a permis aux inventeurs de conclure que dans tous les systèmes d'exploitation, une fonction était composée d'un ensemble de blocs d'instructions. Un bloc d'instructions comprend quelques instructions élémentaires et se termine par une instruction de fin de bloc. Les instructions de fin de bloc sont connues et identifiées et dépendent du processeur. Elles sont les mêmes quelques soient les systèmes d'exploitation qui tournent sur ce processeur. Par exemple, pour le processeur x86, les instructions de fin de bloc comprennent l'instruction indéfinie, ou « ud2 », les instructions de branchement qui comprennent les sauts conditionnels, les sauts inconditionnels «JMP», les instructions d'appels de fonction « CALL », les instructions qui permettent de quitter une procédure telles que « RET », « SYSEXIT » et les instructions qui permettent d'effectuer un transfert de contrôle telles que « SYSENTER ».

Par ailleurs, une instruction de fin de bloc est toujours suivie d'une instruction qui constitue la première instruction d'un bloc suivant, ou d'un ou de plusieurs octets de bourrage (ou « padding » en anglais). Les instructions de bourrage sont ajoutées par le compilateur et sont à ignorer. Les instructions de bourrage sont par ailleurs connues et identifiées. Elles comprennent les instructions NOP, LEAESI, [ESI], LEAEDI, [EDI].

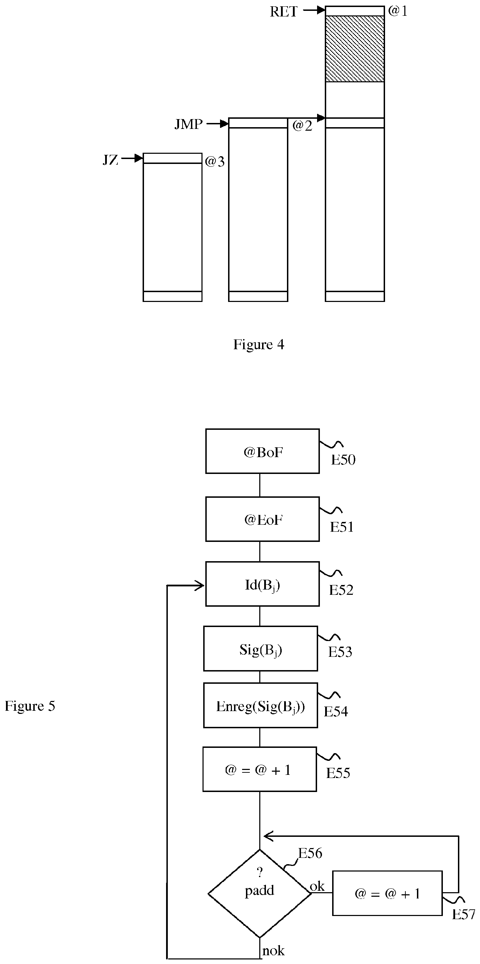

On suppose que l'on dispose d'une base de données de référence, notée BDR, qui comprend pour un ensemble de systèmes d'exploitation donné, un ensemble de signatures des blocs d'instructions qui composent les fonctions du noyau des systèmes d'exploitation. La base de référence BDR mémorise un ensemble de signatures de blocs d'instructions et à chacune des signatures de bloc est associé le nom d'une ou de plusieurs fonctions du noyau dont le bloc d'instructions fait partie. La construction de la base de référence BDR est décrite ultérieurement, en relation avec la figure 5.

La figure 1 est une représentation schématique des principales phases du procédé d'identification d'au moins une fonction d'un noyau d'un système d'exploitation, selon un exemple de réalisation. Chacune des phases est ensuite décrite en détail.

Le procédé d'identification comprend, pour une machine virtuelle donnée et son système d'exploitation, une première phase P1 d'identification d'une instruction initiale et de localisation des blocs suivants qui consiste à identifier une instruction du noyau et à localiser des blocs qui suivent cette instruction. L'instruction, appelée instruction initiale, est une instruction dont on est sûr qu'elle fait partie de l'espace noyau. D'un système d'exploitation à un autre, voire d'une version de système à une autre, l'espace noyau ne se trouve pas au même endroit en mémoire. On ne sait donc pas où cet espace commence et se termine. Il s'agit donc ici de découvrir l'espace mémoire, et dans cet espace d'identifier toutes les fonctions du noyau.

Une fois l'instruction initiale identifiée, les blocs d'instructions situés dans la mémoire après l'instruction initiale sont localisés. Localiser un bloc d'instructions consiste à identifier l'adresse en mémoire de la première instruction du bloc, l'adresse de la dernière instruction du bloc, à calculer une signature des instructions du bloc et à associer cette signature à une ou plusieurs fonctions dans laquelle/lesquelles figure le bloc d'instructions.

Dans une deuxième phase P2 de localisation, des blocs d'instructions situés avant l'instruction initiale I₀ sont localisés. Pour chaque bloc localisé, une signature des instructions du bloc est calculée et la/les fonction(s) dans laquelle/lesquelles le bloc figure est/sont identifiées.

Dans une troisième phase P3 de regroupement, tous les blocs identifiés sont regroupés par fonction. En particulier, un premier bloc et un dernier bloc d'instructions de la fonction du noyau du système d'exploitation sont identifiés parmi les blocs identifiés lors des phases P1 et P2 précédentes. Par ailleurs, une adresse de début de fonction et une adresse de fin de fonction sont enregistrées en association avec la fonction du noyau du système d'exploitation, l'adresse de début de fonction étant l'adresse de la première instruction du premier bloc et l'adresse de fin de fonction étant l'adresse de la dernière instruction du dernier bloc. Au terme de cette troisième phase, toutes les fonctions du noyau sont localisées dans le sens où pour chaque fonction on connaît son adresse de début et son adresse de fin : l'adresse de début est l'adresse de la première instruction du premier bloc de la fonction et l'adresse de fin est l'adresse de la dernière instruction du dernier bloc de la fonction.

Les étapes de la phase P1 d'identification de l'instruction initiale et de localisation des blocs suivants du procédé d'identification vont maintenant être décrites en relation avec la figure 2.

Dans une étape initiale E10 d'identification de l'instruction initiale, il est identifié une instruction initiale, notée I₀ dont on est sûr qu'elle appartient au code du noyau. L'espace mémoire dédié au code du noyau formant un espace contigu en mémoire, on est sûr que les fonctions du noyau sont toutes localisées dans une zone qui comprend l'instruction initiale I₀. Ainsi, même si l'on ne connaît pas la zone d'adressage en mémoire de la zone du noyau, on peut, à partir de l'adresse initiale I₀, chercher dans la zone mémoire qui précède et la zone mémoire qui suit l'instruction initiale I₀ toutes les fonctions du noyau et délimiter ainsi la zone noyau.

Une information dont on est sûr qu'elle se situe dans l'espace noyau est identifiée et localisée. Par exemple, dans l'architecture matérielle x86, il est connu qu'il existe un registre spécial du processeur, appelé « IA32_SYSENTER_EIP », qui pointe sur la première instruction du gestionnaire des appels système (on parle de « dispatcher » en anglais). Le dispatcher est utilisé pour diriger des appels système vers un traitement approprié, c'est-à-dire vers la bonne fonction du noyau. On sait par ailleurs que ce registre appartient au code du noyau. Ainsi, l'instruction pointée par le registre peut être choisie comme instruction initiale I₀. IA32_SYSENTER_EIP est un exemple de registre. Il existe d'autres registres qui peuvent servir à l'identification de l'instruction initiale I₀.

Une fois l'instruction initiale I₀ localisée, il est procédé au désassemblage des instructions à partir de l'instruction initiale I₀ pour identifier les blocs de fonctions compris entre l'instruction initiale I₀ et la fin du code du noyau.

Pour mémoire, un désassembleur est un programme qui traduit du langage machine, donc un fichier exécutable, en langage assembleur, ou langage « bas-niveau », qui représente le langage machine sous une forme compréhensible pour un humain. A cette fin des librairies de désassemblage sont utilisées, par exemple la librairie appelée Udis86 qui s'exécute dans l'espace noyau. Lors d'un désassemblage, il est possible de savoir combien d'octets sont à prendre en compte pour désassembler correctement une instruction. Cette information est en effet indiquée dans le premier octet de l'instruction. Ainsi, si l'on commence le désassemblage à partir d'un premier octet d'une instruction, on sait combien d'octets sont à prendre en compte pour désassembler l'instruction.

Habituellement l'instruction initiale I₀ se situe au milieu d'un bloc d'instructions. Il est donc nécessaire, pour identifier des blocs suivants complets de se placer à la fin du bloc qui comprend l'instruction initiale I₀.

Une instruction de fin de bloc est connue. Il est donc cherché dans les instructions qui suivent l'instruction initiale I₀, une première instruction de fin de bloc. La recherche est effectuée en scannant la mémoire. Une fois cette première instruction de fin de bloc localisée, les blocs d'instructions suivants sont localisés par désassemblage des instructions.

Ainsi, dans une étape E11 d'identification d'une première fin de bloc, la première instruction de fin de bloc qui suit l'instruction initiale I₀ est identifiée.

Dans une étape suivante E12 de déplacement à l'instruction suivante, on se place sur l'instruction qui suit immédiatement la fin du bloc identifié précédemment. Cette instruction est appelée instruction courante.

Dans une étape E13 de test, il est testé si l'instruction courante est une instruction de bourrage.

Dans un premier cas où l'instruction courante est une instruction de bourrage (branche 'ok' sur la figure 2), alors dans une étape E14 de déplacement à l'instruction suivante, on se place à l'instruction qui suit cette instruction de bourrage et on réitère l'étape E13 de test. Il peut en effet y avoir plusieurs instructions de bourrage qui se suivent et qui ne sont pas significatives pour l'identification des blocs d'instructions de fonctions du noyau.

Dans un deuxième cas où l'instruction courante ne correspond pas à une instruction de bourrage (branche 'nok' sur la figure 2), il est sûr que l'instruction courante est une instruction de début de bloc. Il convient alors d'identifier une prochaine instruction de fin de bloc qui correspond alors à la fin du bloc associée à l'instruction de début de bloc. Ainsi, les instructions comprises entre l'instruction de début de bloc et l'instruction de fin de bloc appartiennent à un même bloc, appelé bloc courant B;.

Dans une étape suivante E15 d'identification d'une fin de bloc, il est cherché dans les instructions suivantes, la première instruction de fin de bloc telle que référencée dans l'ensemble des instructions de fin de bloc. Au terme de l'étape E15, la fin du bloc courant Bᵢ a été trouvée. Ainsi on dispose de l'ensemble des instructions du bloc courant Bᵢ ; elles sont comprises entre la première instruction et l'instruction de fin de bloc.

Dans une étape suivante E16 de calcul de signature, il est calculé la signature Sᵢ du bloc courant Bᵢ identifié précédemment. Plus précisément, il est appliqué une fonction de hachage aux instructions du bloc courant Bᵢ. La fonction de hachage est la même fonction que celle utilisée pour construire la base de référence BDR.

A noter qu'entre la première et la dernière instruction du bloc figurent peut-être des instructions particulières qui manipulent tout ou partie d'une adresse. Un tel appel correspond par exemple à l'instruction «CALL 0xc10bb0c0», où «0xc10bb0c0» désigne l'adresse du code à exécuter. Il est connu que certains systèmes d'exploitation rendent aléatoire, d'un démarrage de machine virtuelle à un autre, l'adresse à laquelle un code peut être trouvé. Il s'agit du mécanisme connu sous le nom de « distribution aléatoire de l'espace d'adressage », (ou « Address Space Layout Randomization » en anglais), destiné à limiter l'effet de certaines attaques qui se basent sur des structures fixes, connues et documentées des processus. Le calcul de la signature prend en compte des codes opérations, ou « opcode », qui correspondent aux actions à exécuter par le processeur, et des opérandes de type registre. Afin de garder une signature similaire entre deux blocs d'instructions identiques, il n'est pas tenu compte pour le calcul de la signature des adresses susceptibles d'être randomisées. Ces adresses peuvent être remplacées par une valeur constante, par exemple zéro.

Dans une étape suivante E17 de recherche de fonction, il est cherché dans la base de référence BDR la signature Sᵢ du code du bloc courant Bᵢ. Cette recherche est destinée à identifier la (ou les) fonction(s) dans laquelle le bloc courant Bᵢ apparaît.

Dans un premier cas où la signature Sᵢ du bloc courant Bᵢ n'est pas trouvée dans la base de référence BDR (cas 'nok' sur la figure 2), le procédé s'arrête. En effet, on suppose que la base de référence BDR est complète et comprend l'ensemble des signatures de l'ensemble des blocs qui composent l'ensemble des fonctions du noyau. Si la signature du bloc courant B; n'est pas trouvée dans la base de référence BDR, cela signifie que le bloc courant Bᵢ n'appartient pas au code du noyau. Dans ce cas, on estime que la fin du bloc précédent correspond à la fin du code du noyau.

Dans un deuxième cas où la signature Sᵢ du bloc courant B; est trouvée dans la base de référence BDR (cas 'ok' sur la figure 2), dans une étape E18 d'enregistrement, il est mémorisé dans une table de blocs TB_{b}, l'adresse de début de bloc, correspondant à l'adresse de la première instruction du bloc courant B; et l'adresse de fin de bloc, correspondant à l'adresse de la dernière instruction du bloc courant Bᵢ, en association avec le nom de la (ou des) fonction(s) qui a été trouvé dans la base de référence BDR. Il est en effet possible qu'un bloc, c'est-à-dire les instructions de ce bloc, soit présent dans plusieurs fonctions. Ce peut être notamment le cas de blocs qui comprennent peu d'instructions.

Dans le cas où la signature du bloc courant Bᵢ est trouvée dans la base de référence BDR, les étapes E12 à E18 sont itérées jusqu'à la fin de l'espace noyau.

Au terme de ces étapes, la table de blocs TB_{b} comprend l'ensemble des blocs qui ont été identifiés à partir de l'instruction initiale I₀ jusqu'à la fin de l'espace noyau. Plus précisément, un enregistrement associé à un bloc comprend une adresse de début de bloc qui correspond à l'adresse de la première instruction du bloc et une adresse de fin de bloc qui correspond à l'adresse de la dernière instruction du bloc, et le nom d'une ou de plusieurs fonctions dans laquelle/lesquelles le bloc d'instructions apparaît.

Les étapes de la phase P2 de localisation des blocs qui précèdent en mémoire l'instruction initiale vont maintenant être décrites en relation avec les figures 3 et 4.

Il est plus compliqué d'identifier les blocs qui précèdent l'instruction initiale I₀ que celles qui la suivent. En effet, les instructions du processeur x86 ont des tailles variables, d'un à plusieurs octets, et ne sont pas alignées en mémoire. Il est donc difficile de désassembler du code binaire en assembleur en remontant dans la mémoire car on n'est jamais assuré qu'un octet correspond à un début d'instruction et on ne sait pas si un octet correspond à une instruction ou à un opérande. Par ailleurs tout octet, pour le processeur x86 a une signification. Il est donc possible de désassembler le deuxième octet d'une instruction qui en comprend plusieurs et d'obtenir en langage assembleur une instruction qui existe. Pour autant, le code assembleur obtenu ne correspond pas à l'instruction binaire qui commençait à l'octet précédent. Enfin, on ne sait pas où se positionner dans la mémoire pour désassembler le code binaire car on ne sait pas où commence le code du noyau.

Afin de désassembler correctement le code binaire qui précède l'instruction initiale I₀, on utilise astucieusement un mécanisme connu d'auto-réparation du désassemblage (ou « self-repairing disassembling » en anglais). Ce mécanisme prévoit que des séquences d'instructions obtenues par désassemblage d'un code binaire à partir de différentes adresses de la mémoire et jusqu'à une adresse donnée, par exemple ici l'adresse initiale I₀, finissent par se resynchroniser sur des instructions correctes après éventuellement quelques instructions différentes qui correspondent pour au moins une des deux séquences à des instructions incorrectes. Ainsi, si le désassemblage d'une séquence d'instructions ne commence pas sur le premier octet d'une instruction, grâce à ce mécanisme d'auto-réparation, le désassembleur finit par se resynchroniser avec le flot des instructions suivantes.

L'annexe 1 permet d'illustrer ce mécanisme. Le code assembleur correct de la fonction « sys_getpid » qui permet de retourner un identificateur de processus est fourni dans la colonne de gauche. Il est obtenu par exemple par désassemblage du code binaire associé. La colonne de droite montre le désassemblage du code binaire depuis l'instruction située à l'adresse 0x106be02. Dans la colonne de gauche, on remarque que l'instruction « mov ebp, esp » se trouve à l'adresse 0x106be01 et tient sur deux octets. Dans la colonne de droite, le désassemblage a démarré à l'adresse 0x106be02, ce qui correspond au deuxième octet de l'instruction. A cette adresse, le désassembleur a identifié une instruction, en l'espèce « in eax, 0x3e », différente des instructions qui figurent dans la fonction « sys_getpid ». On remarque également qu'à partir de l'adresse 0x106be08, les instructions qui apparaissent dans les deux colonnes sont identiques. C'est le mécanisme d'auto-réparation qui a produit son effet. Le désassemblage s'est resynchronisé sur les instructions correctes. En général, il ne se passe pas plus de quelques instructions, au maximum cinq instructions, avant qu'il y ait resynchronisation du code.

Le procédé d'identification des blocs constitutifs de fonctions qui précèdent en mémoire l'instruction initiale I₀ utilise ce mécanisme d'auto-réparation du désassemblage pour identifier les blocs de fonction qui figurent avant l'instruction initiale I₀ que l'on sait être une instruction correcte.

Ainsi, dans une étape initiale E20 de localisation d'une pluralité d'instructions de fin de bloc, il est recherché dans le code qui précède l'instruction initiale I₀, en analysant le code octet par octet, des adresses dans lesquelles se trouvent, ou semblent se trouver des instructions de fin de bloc sélectionnées. Dans un exemple de réalisation, illustré par la figure 4, trois instructions différentes de fin de bloc sont cherchées : une instruction de retour « RET », une instruction de saut inconditionnel «JMP» et une instruction de saut conditionnel, par exemple l'instruction « JZ » de saut si le drapeau du zéro est à 1. Il est volontairement choisi dans cet exemple de limiter le nombre d'instructions de fin de bloc recherchées à quelques-unes afin d'optimiser les temps de traitement. On suppose que trois adresses, notées @1,@2 et @3 sur la figure 4, ont été identifiées dans une zone de la mémoire désassemblée qui précède l'instruction initiale I₀. La première adresse, @1, est celle qui est la plus éloignée de l'instruction initiale I₀, la troisième adresse, @3, est celle qui est la plus proche de l'instruction initiale I₀. La deuxième, @2, se situe entre les deux. Ces trois adresses définissent ainsi trois zones de mémoire qui sont représentées schématiquement par trois colonnes, sur la figure 4

Dans cet exemple de réalisation, il est pris en compte une distance de sécurité de manière à ce qu'au moins soixante-quinze octets séparent la première et la deuxième instruction de fin de bloc situées respectivement aux adresses @1 et @2. On considère qu'en moyenne le mécanisme d'auto-réparation agit rapidement, et qu'en un maximum de cinq instructions, il y a resynchronisation des instructions. Par ailleurs, on considère qu'en moyenne une instruction est codée sur cinq octets. La distance de sécurité entre les adresses @1 et @2 permet ainsi de garantir que l'auto-réparation a pris effet avant la deuxième adresse @2. Par ailleurs, la troisième instruction de fin de bloc située à la troisième adresse @3 n'est pas analysée en tant que telle mais permet d'obtenir plus d'instructions correctes. Ces choix sont destinés à faciliter le désassemblage et à optimiser, en matière de performances, la recherche des blocs d'instructions dans la zone mémoire qui précède l'instruction initiale I₀.

Dans une étape E21 de vérification, il est vérifié, que lors d'un désassemblage à partir de la première instruction située à l'adresse @1 et jusqu'à l'adresse initiale I₀, l'instruction qui figure à la deuxième adresse @2 correspond à la deuxième instruction de fin de bloc. En d'autres termes, il est vérifié que l'instruction qui figure au début de la deuxième colonne, correspond à celle qui se trouve à la même adresse dans la première colonne. Dans ce cas, cela signifie que cette instruction est correcte. Sur la figure 4, on suppose que la resynchronisation du code est effective après les instructions qui figurent dans la partie hachurée, représentée dans la troisième colonne. Il convient alors d'identifier les blocs d'instructions compris entre l'instruction correcte qui vient d'être identifiée et qui correspond à la deuxième instruction, et l'instruction initiale I₀ que l'on sait correcte. L'instruction correcte est une instruction représentative d'une fin de bloc. L'identification de blocs d'instructions est similaire à l'identification de blocs telle que mise en oeuvre au cours des étapes E12 à E18.

Ainsi, dans une étape E22 de déplacement à l'instruction suivante, on se place sur l'instruction qui suit immédiatement la fin du bloc identifié précédemment. Cette instruction est appelée instruction courante.

Dans une étape suivante E23 de test, comparable à l'étape E13, il est vérifié si l'instruction courante est une instruction de bourrage. Dans un premier cas où l'instruction courante est une instruction de bourrage (branche `ok' sur la figure 3), alors dans une étape E24 de déplacement à l'instruction suivante, on se place sur l'instruction qui suit cette instruction de bourrage et l'étape E23 est itérée. Dans un deuxième cas où l'instruction courante ne correspond pas à une instruction de bourrage (branche 'nok' sur la figure 3), l'instruction courante est identifiée comme une instruction de début de bloc. Il convient alors d'identifier la prochaine instruction de fin de bloc qui correspond alors à la fin du bloc associée à l'instruction de début de bloc. Ce bloc est appelé bloc courant B;.

Dans une étape suivante E25 d'identification d'une instruction de fin de bloc, et de manière comparable à l'étape E15 décrite précédemment, il est cherché dans les instructions suivantes la première instruction de fin de bloc. Cette instruction est représentative de la fin du bloc courant B;.

Il est ensuite calculé dans une étape E26 de calcul d'une signature, comparable à l'étape E16, la signature Sᵢ des instructions qui composent le bloc courant Bᵢ.

Dans une étape suivante E27 de recherche, comparable à l'étape E17, il est cherché dans la base de référence BDR la signature Sᵢ des instructions du bloc courant Bᵢ calculée au cours de l'étape E26 afin d'identifier la (ou les) fonction dans laquelle le bloc courant Bᵢ apparaît.

Dans un premier cas où la signature Sᵢ du bloc courant Bᵢ n'est pas trouvée dans la base de référence BDR (cas 'nok' sur la figure 3), on suppose que le bloc courant Bᵢ ne fait pas partie du code du noyau. Dans ce cas, il convient d'identifier des blocs suivants et de vérifier si ces blocs appartiennent au noyau. Le procédé retourne à l'étape E22 de manière à identifier un ou des blocs suivants.

Dans un deuxième cas où la signature Sᵢ du bloc courant B; est trouvée dans la base de référence BDR (cas `ok' sur la figure 3), alors, dans une étape suivant E28 d'enregistrement, il est mémorisé dans la table de blocs TB_{b}, l'adresse de début de bloc, correspondant à l'adresse de la première instruction du bloc courant B; et l'adresse de fin de bloc, correspondant à l'adresse la dernière instruction du bloc, en association avec le nom de la ou des fonctions qui a été trouvé dans la base de référence BDR.

Dans le cas où la signature du bloc courant Bᵢ est trouvée dans le base de référence, les étapes E22 à E28 sont itérées jusqu'à l'instruction de fin de bloc qui suit l'instruction initiale I₀.

Les étapes E20 à E28 sont ensuite répétées sur une zone de code qui précède l'instruction de début de bloc identifiée au cours au cours de l'étape de test E23.

Au terme de ces itérations, la table de blocs TB_{b} comprend l'ensemble des blocs qui ont été identifiés dans l'espace noyau. En effet la table de blocs TB_{b} qui comprenait les blocs identifiés à partir de l'instruction initiale I₀ jusqu'à la fin de l'espace noyau, a été complétée avec les blocs de la zone noyau qui précèdent l'instruction initiale I₀. Pour chaque bloc, la table de blocs TB_{b} comprend l'adresse de la première instruction du bloc et l'adresse de la dernière instruction du bloc. La table comprend également pour chaque bloc le nom de la ou des fonctions dans laquelle/lesquelles la signature du bloc a été trouvée. Enfin, dans un exemple de réalisation, la table mémorise également la signature du bloc.

Les étapes de la phase P3 de regroupement des blocs en fonction, selon un exemple de réalisation, vont maintenant être décrites et illustrées en relation avec l'annexe 2.

Au terme des étapes décrites précédemment, l'ensemble de l'espace mémoire du code noyau de la machine virtuelle a été scanné et l'ensemble des blocs qui composent l'ensemble des fonctions du noyau a été localisé. Un bloc, plus précisément la signature de ce bloc, peut avoir été trouvé dans plusieurs fonctions. Cependant, pour un tel bloc les adresses de la première instruction et de la dernière instruction de bloc sont différentes. En effet ces blocs apparaissent à différents endroits de la mémoire. Ainsi la table de blocs TB_{b} peut comprendre plusieurs lignes qui diffèrent uniquement par l'adresse de début et de fin de bloc.

L'annexe 2 présente un extrait de la table de blocs TB_{b}. Dans cet extrait, et dans un souci de lisibilité, les signatures de bloc ont été enlevées.

Dans la phase P3 de regroupement, il convient ensuite de regrouper les blocs qui appartiennent à la même fonction afin de délimiter les fonctions. Ce regroupement est destiné à identifier, pour chaque fonction du noyau, une adresse de début et une adresse de fin. L'adresse de début correspond à l'adresse de la première instruction du premier bloc qui compose la fonction et l'adresse de fin à l'adresse de la dernière instruction du dernier bloc de la fonction.

Afin de mettre en oeuvre les étapes de la phase de regroupement, la table de blocs TB_{b}, est réorganisée par ordre croissant des adresses des premières instructions des blocs, comme illustré à l'annexe 2. L'annexe 2 présente différents cas de figure qui peuvent être rencontrés dans la succession des blocs.

Les étapes de la phase de regroupement sont décrites ici en suivant l'ordre des cas de figure présentés en annexe. Bien sûr, l'invention n'est pas limitée à un tel ordre et n'est pas limitée non plus à ces quelques enregistrements.

La table de blocs TB_{b} est parcourue dans l'ordre croissant des adresses de la mémoire de la zone noyau.

Dans un premier cas de figure, illustré par les lignes 1 à 4 de la table de blocs TB_{b}, le rattachement des blocs à une fonction est assez immédiat. Ainsi, un premier enregistrement qui correspond à un bloc courant qui figure sur la première ligne de la table de blocs TB_{b} est analysé. Le bloc courant est associé à une fonction courante. Il n'y a aucun doute que le bloc courant est le premier bloc, ou bloc initial de la fonction courante « sys_close ». L'adresse de début du premier bloc, 0xc10b2296, est donc associée à l'adresse de début de la fonction courante « sys_close » dans une table de fonctions TB_{F}.

Un enregistrement suivant, représenté par la deuxième ligne de la table de blocs TB_{b} est analysé et le bloc décrit par cet enregistrement devient le bloc courant. Il est vérifié si le bloc courant appartient à la fonction courante, ici « sys_close ». Un seul nom de fonction étant associé au bloc courant et celui-ci étant égal au nom de la fonction courante, le bloc courant appartient donc à la fonction courante « sys_close », et uniquement à cette fonction. Les étapes précédentes sont itérées sur des enregistrements suivants, jusqu'à ce que le nom de la fonction associée au bloc courant dans la table de blocs TB_{b} soit différent du nom de la fonction courante du bloc analysé au cours de l'étape précédente, ou jusqu'à ce que plusieurs autres noms de fonction soient référencés. Ainsi, les étapes sont itérées jusqu'à l'enregistrement qui figure à la quatrième ligne de la table de blocs TB_{b}. En effet, pour cet enregistrement, le nom de la fonction associée au bloc courant, « do_sys_open », est différent du nom de la fonction courante « sys_close ». Cela signifie que le bloc précédent, analysé à l'étape précédente constituait le dernier bloc d'instructions de la fonction courante « sys_close » et le bloc courant, qui n' apparaît que dans la fonction « do_sys_open » est le premier bloc de cette fonction. La table des fonctions TB_{F} est mise à jour : l'adresse de la dernière instruction du bloc précédent, 0xc10b2322, est enregistrée comme adresse de la dernière instruction de la fonction courante « sys_close ». La fonction « do_sys_open » devient la fonction courante. L'adresse de la première instruction du bloc courant, 0xc10b2323, est enregistrée comme adresse de début de la fonction courante « do_sys_open » dans la table de fonctions TB_{F}.

L'analyse des enregistrements suivants correspond à un deuxième cas de figure.

Dans une étape de passage au bloc suivant, un enregistrement suivant, qui figure sur la cinquième ligne de la table de blocs TB_{b} est analysé et le bloc décrit devient le bloc courant. Il est vérifié si le bloc courant appartient à la fonction courante, « do_sys_open ». Le bloc courant n'apparaissant que dans la fonction « do_sys_open », il appartient à la fonction courante « do_sys_open » et uniquement à cette fonction. Les enregistrements suivants sont analysés, jusqu'à ce que le nom de la fonction associée au bloc courant soit différent du nom de la fonction courante du bloc analysé au cours de l'étape précédente, ou jusqu'à ce que plusieurs autres noms de fonction soient référencés. Ainsi, l'analyse se poursuit jusqu'à l'enregistrement associé à la sixième ligne de la table de blocs TB_{b}. Le bloc courant associé à cet enregistrement appartient potentiellement à plusieurs fonctions, en l'espèce soit « do_sys_open », soit « keyring_read ».

Dans une étape suivante de test, il est vérifié si la fonction courante, « do_sys_open » est listée parmi les noms de fonction associés au bloc courant.

Dans un premier cas, vérifié ici, où le nom de la fonction courante apparaît, alors on estime que le bloc courant appartient à la fonction courante « do_sys_open ». En effet, en raison de la proximité en mémoire des blocs d'instructions relatifs à une fonction, on estime que le bloc courant ne peut appartenir qu'à la fonction courante. A noter que dans un deuxième cas, le nom de la fonction courante aurait pu ne pas faire partie des noms des fonctions associés au bloc courant. Dans ce cas, le bloc précédent le bloc courant aurait été le dernier bloc de la fonction courante « do_sys_open » et la table de fonctions TB_{F} aurait été mise à jour en conséquence.

Dans une étape suivante, un enregistrement suivant représenté par la septième ligne de la table de blocs TB_{B} est analysé. Le bloc associé devient le bloc courant.

Cela correspond à un troisième cas de figure.

Dans une étape d'analyse, le bloc courant est analysé. Le bloc figure potentiellement dans plusieurs fonctions, en l'espèce « vmi update_pte » et « vmi_update_pte_defer». Il est vérifié si le nom de la fonction courante « do_sys _open » apparaît dans la liste des noms de fonction. Le nom de la fonction courante n'apparaît pas. Cela signifie que le dernier bloc de la fonction courante « do_sys_open » est le bloc précédent représenté sur la sixième ligne de la table. La table de fonctions TB_{F} est mise à jour en conséquence et les informations sur la fonction courante « do_sys_open » sont enregistrées : l'adresse 0xc10b2401 est enregistrée comme l'adresse de fin de la fonction « do_sys_open ».

Le bloc courant correspond au premier bloc d'une nouvelle fonction courante. On ne sait pas à ce stade de quelle fonction il s'agit.

Les blocs suivants sont alors analysés. Le bloc représenté par l'enregistrement qui figure à la huitième ligne de la table de blocs TB_{B} ne permet pas d'identifier la fonction courante. Le bloc représenté par l'enregistrement qui figure à la neuvième ligne n'appartient qu'à une seule fonction, « vmi_update_pte » qui faisait partie des noms de fonction listés pour les blocs précédents. La fonction courante associée aux blocs représentés par les sixième, septième et huitième lignes est donc « vmi_update_pte ».

Les informations de la table de fonction TB_{F} sont mises à jour : l'adresse 0xc101a340 de la première instruction du premier bloc de la fonction courante représenté à la septième ligne de la table de blocs TB_{B} est enregistrée comme adresse de la première instruction de la fonction « vmi_update_pte ».

Dans une étape suivante, le bloc représenté par l'enregistrement qui figure à la dixième ligne de la table de blocs TB_{B} devient le bloc courant et il est analysé. Le bloc courant appartient potentiellement à deux fonctions, « vmi_update_pte » ou « vmi_update_pte_defer ». Le nom d'une des fonctions, en l'espèce « vmi update_pte » est le nom de la fonction courante associée au bloc précédent. Dans ce cas, soit le bloc courant appartient à la fonction courante, « vmi_update_pte », soit le bloc courant est le premier bloc de la fonction « vmi_update_pte_defer ».

Afin d'identifier la fonction à laquelle le bloc courant appartient, la signature du premier bloc de la fonction courante, ici « vmi_update_pte » est comparée à la signature du bloc courant, représenté par l'enregistrement qui figure à la dixième ligne de la table de blocs TB_{B}. Si la signature est identique, cela signifie que le bloc courant est le premier bloc d'une fonction. On considère en effet qu'un premier bloc de fonction est représentatif d'un début de fonction, car il comprend en général des instructions spécifiques à une fonction, par exemple des instructions d'initialisation. Le bloc courant ne peut donc appartenir à la fonction courante car il ne peut y avoir un deuxième bloc de début de fonction dans la fonction courante. En d'autres termes le bloc courant ne peut pas appartenir à la fonction courante « vmi update_pte ». C'est donc forcément un bloc de début d'une autre fonction.

Dans ce cas, le bloc précédent était le dernier bloc de la fonction courante, « vmi_update_pte », et le bloc courant est le premier bloc d'une nouvelle fonction, ici « vmi_update_pte_defer ». A noter que si le bloc courant apparaissait dans plus de deux fonctions, on ne pourrait pas connaître à ce stade le nom de la nouvelle fonction. Le nom de la nouvelle fonction serait alors déterminé en poursuivant l'analyse des enregistrements.

Dans une étape suivante, la table de fonctions TB_{F} est mise à jour : l'adresse de la dernière instruction du bloc précédent, 0xc101a377, est enregistrée comme adresse de la dernière instruction de la fonction courante « vmi_update_pte ». Pour cet exemple, la fonction courante devient « vmi_update_pte_defer » et l'adresse de la première instruction du bloc courant, 0xc101a37d, est enregistrée comme adresse de début de la fonction courante « vmi_update_pte_defer ».

Les blocs suivants sont analysés. Le bloc représenté par l'enregistrement qui figure à la douzième ligne correspond au dernier bloc de la fonction « vmi_update_pte_defer ». La table de fonctions TB_{F} est mise à jour en conséquence.

L'analyse est ainsi poursuivie sur la table de blocs TB_{b} qui comprend l'ensemble des blocs localisés dans l'espace noyau.

Au terme de cette analyse la table de fonctions TB_{F} comprend pour l'ensemble des fonctions du noyau du système d'exploitation de la machine virtuelle, une adresse de début et une adresse de fin de fonction qui correspondent respectivement à la première instruction du premier bloc de la fonction et à la dernière instruction du dernier bloc de la fonction. La table de fonctions TB_{F} fournit ainsi une cartographie du noyau du système d'exploitation en matière de fonctions du noyau. A noter que ces informations ont été déterminées sans connaissance a priori du système d'exploitation qui tourne sur la machine virtuelle.

Les étapes d'un procédé de construction d'une base de référence qui comprend, pour au moins un système d'exploitation donné, l'ensemble des signatures des blocs qui composent les fonctions du noyau du système d'exploitation, selon un exemple de réalisation, vont maintenant être décrites en relation avec la figure 5.

Pour chaque système d'exploitation, voire chaque version d'un système d'exploitation, il existe une documentation qui associe à chaque fonction du système d'exploitation une adresse en mémoire qui correspond à l'adresse de la première instruction de la fonction, ou adresse de début de fonction. Les fonctions référencées dans la documentation sont ordonnées dans le sens où une fonction décrite à la suite d'une autre suit en mémoire cette autre fonction. En d'autres termes, l'adresse de début de la fonction suit en mémoire la dernière instruction de l'autre fonction. A noter que dans certains cas il est possible que des octets de bourrage séparent en mémoire le début de la fonction de la dernière instruction de l'autre fonction.

Le procédé de construction de la base de référence BDR introduit la notion de bloc dans une fonction. Une fonction est composée de blocs d'instructions. Construire la base de référence BDR consiste donc à identifier et à référencer l'ensemble des blocs qui constituent les fonctions du noyau.

Les étapes du procédé de création de la base de référence BDR sont mises en oeuvre dans un environnement d'apprentissage (non représenté sur la figure 5). Dans cet environnement un serveur hôte d'une architecture en cloud computing héberge une machine virtuelle (non représentée) dont on connaît le système d'exploitation. On suppose que l'on dispose également de la documentation associée au système d'exploitation de la machine virtuelle. La documentation fournit pour chaque fonction du noyau une adresse de début de fonction qui correspond à l'adresse de la première instruction de la fonction, en association avec le nom de la fonction.

Dans une étape initiale E50, l'adresse de la première fonction du noyau, fournie dans la documentation est associée à l'adresse de début d'une fonction courante et à l'adresse de début d'un bloc courant Bⱼ.

Dans une étape E51 de détermination d'une adresse de fin de la fonction courante, il est calculé l'adresse qui précède immédiatement en mémoire l'adresse de début de la fonction qui suit la fonction courante dans la documentation. Cette adresse est associée à l'adresse de fin de la fonction courante.

Dans une étape suivante E52 de détermination d'un bloc, il est recherché une instruction de fin de bloc dans une zone mémoire qui suit l'adresse de début du bloc courant, et qui précède l'adresse de fin de la fonction courante. Les instructions comprises entre l'adresse de début du bloc courant et l'instruction de fin de bloc constituent les instructions du bloc courant Bⱼ.

Dans une étape suivante E53 de calcul d'une signature, il est calculé une signature cryptographique des instructions du bloc courant au moyen d'une fonction de hachage. Dans un exemple de réalisation la fonction de hachage utilisée est MD5 (de l'anglais « Message Digest 5 »). L'invention n'est bien sûr pas limitée à cette fonction et des fonctions telles que SHA-2, SHA-3 (de l'anglais « Secure Hash Algorithm ») peuvent également être utilisées. A noter qu'il n'est pas tenu compte pour le calcul de la signature d'adresses susceptibles d'être randomisées, conformément au mécanisme connu de distribution aléatoire de l'espace d'adressage. Lorsque de telles adresses sont rencontrées, elles sont remplacées par une valeur constante, par exemple zéro.

Dans une étape E54 d'enregistrement, la signature du bloc courant Bⱼ est enregistrée dans la base de données de référence BDR, en association avec le nom de la fonction courante.

Dans une étape E55 de déplacement, l'adresse de début d'un bloc suivant est positionnée sur l'adresse qui suit en mémoire l'adresse de fin du bloc courant. Ce bloc devient le bloc courant.

Dans une étape E56 de test il est vérifié si l'instruction qui figure à l'adresse de début de bloc courant Bⱼ correspond à un octet de bourrage. Dans un premier cas où il s'agit d'un octet de bourrage (cas 'ok' sur la figure 5), l'adresse de début du bloc courant Bⱼ est positionnée sur l'adresse suivante dans une étape E57 de déplacement et l'étape E56 est exécutée. Dans un deuxième cas où la première instruction du bloc courant ne correspond pas à un octet de bourrage (branche 'nok' sur la figure 5), alors les étapes E52, E53 et E54 sont exécutées de manière à identifier l'instruction de fin du bloc courant Bⱼ, à calculer la signature des instructions et à enregistrer cette signature dans la base de référence en association avec le nom de la fonction.

Les étapes E52 à E57 sont itérées jusqu'à ce que tous les blocs compris entre l'adresse de début de la fonction courante et l'adresse de fin aient été traités.

Les étapes E50 à E57 sont ensuite itérées pour une fonction suivante. La fonction suivante est une fonction qui suit en mémoire, et donc dans la documentation, la fonction courante. La fonction suivante devient la fonction courante lors de l'exécution des étapes.

A noter qu'un même bloc d'instructions peut apparaître dans différentes fonctions. Ce peut être le cas de blocs qui comprennent très peu d'instructions. Dans cet exemple, la base de référence BDR associe à la signature du bloc le nom de toutes les fonctions dans lesquelles il apparaît.

Une fois que toutes les fonctions de la documentation du système d'exploitation de la machine virtuelle ont été analysées, la base de données de référence BDR comprend les signatures de l'ensemble des blocs d'instructions de toutes les fonctions du noyau. A chaque signature est associée le nom de la (ou des) fonction(s) à laquelle/auxquelles le bloc appartient.

La phase d'apprentissage est mise en oeuvre sur tous les systèmes d'exploitation que l'on souhaite référencer et pour lesquels on dispose d'une documentation.

La base de référence BDR ainsi obtenue ne fait pas de distinction entre les systèmes d'exploitation. Elle associe une signature de bloc d'instructions à une ou plusieurs fonctions, indépendamment de tout système d'exploitation.

Une fois les étapes du procédé d'identification d'au moins une fonction d'un noyau d'un système d'exploitation d'une machine virtuelle mises en oeuvre, il est possible de superviser l'exécution d'une machine virtuelle sur laquelle tourne ce système d'exploitation. Une telle supervision peut s'avérer utile dans le cadre d'une détection de comportements malicieux, par observation des appels et des fins d'appel de fonctions du noyau, voire dans le cadre d'une réaction suite à la détection de comportements malicieux. Les procédés suivants décrivent comment le procédé d'identification d'au moins une fonction du noyau peut être utilisé pour mettre en oeuvre une supervision de machines virtuelles.

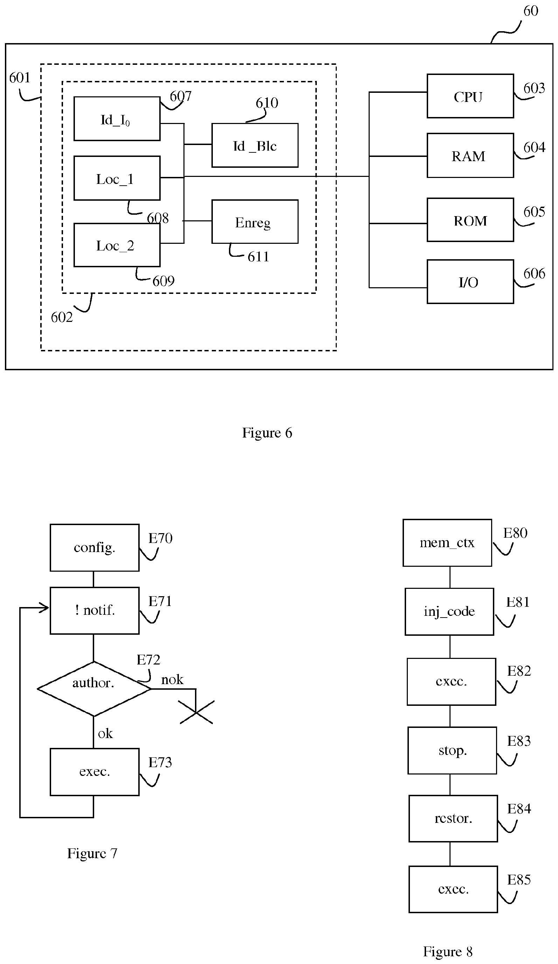

Les étapes d'un premier procédé de supervision, selon un exemple de réalisation, vont maintenant être décrites en relation avec la figure 7. Ces étapes sont mises en oeuvre par un module de supervision qui comprend des instructions logicielles destinées à notifier un administrateur de sécurité de l'exécution d'une fonction du noyau. Dans l'exemple décrit ici, le module de supervision est compris dans l'hyperviseur.

On suppose que l'on dispose, pour la machine virtuelle dont on souhaite superviser l'exécution, de la table de fonctions TB_{F} construite lors d'une mise en oeuvre du procédé d'identification d'au moins une fonction du noyau. Cette table comprend, pour l'ensemble des fonctions du noyau du système d'exploitation de la machine virtuelle, les adresses de début et de fin de fonction associées au nom de la fonction.

Dans une étape initiale E70 de configuration, l'administrateur de sécurité identifie dans le cadre de la supervision qu'il souhaite établir, les fonctions du noyau du système d'exploitation de la machine virtuelle dont il souhaite être notifié de l'exécution. Par exemple, l'administrateur souhaite être informé de l'exécution de la fonction « kill » qui permet d'envoyer un signal à un processus. Dans un exemple de réalisation, l'administrateur commande au module de supervision le positionnement, au niveau d'une zone mémoire allouée à la machine virtuelle, de bits associés au mode d'exécution d'une page mémoire où figure la première instruction de la fonction noyau « kill » à « non exécutable ». Le module de supervision connaît, grâce à la table de fonctions TB_{F} associée à la machine virtuelle, l'adresse du point d'entrée de la fonction « kill » et donc la page mémoire qui contient les bits à positionner à non exécutable. Cela a comme effet de rendre non exécutable la fonction noyau « kill ».

Dans une étape suivante E71 de notification, mise en oeuvre lors de l'exécution de la machine virtuelle, l'administrateur reçoit via le module de supervision une notification d'une tentative d'exécution de la fonction noyau « kill ». Plus précisément, le mode d'exécution des fonctions comprises dans la zone mémoire où figure la première instruction de la fonction noyau « kill » ayant été positionné à non exécutable, une tentative d'exécution de la fonction « kill » par le système d'exploitation de la machine virtuelle génère une exception au niveau du système d'exploitation qui provoque un arrêt de la machine virtuelle. L'hyperviseur est notifié de cette exception, il en informe le module de supervision.

Dans une étape suivante E72 de choix, le module de supervision choisit d'autoriser ou non l'exécution de la fonction du noyau « kill ». L'autorisation peut être demandée explicitement à l'administrateur de sécurité. Dans un cas où l'exécution est autorisée (branche 'ok' sur la figure 7), l'exécution de la machine virtuelle reprend au cours de l'étape E73 de reprise. Dans un second cas où l'exécution n'est pas autorisée (branche 'nok'), le procédé s'arrête. Dans un autre exemple de réalisation, le choix peut être configuré au niveau du module de supervision : la notification peut donner lieu à un message explicite sur une console ou dans un journal, la notification peut arrêter systématiquement l'exécution de la machine virtuelle, etc.

L'exemple décrit ici correspond à une supervision active de l'exécution de la machine virtuelle dans le sens où l'hyperviseur reçoit en temps réel des informations sur l'état de la machine virtuelle, conformément à la configuration établie au cours de l'étape initiale E70.

Dans un autre exemple de supervision par notification à l'hyperviseur, le module de supervision injecte dans le code d'une fonction du noyau dont il souhaite superviser l'exécution, une ou plusieurs instructions d'interception d'activité. Plus précisément, le module de supervision sauvegarde la première instruction de la fonction, pour éventuellement l'émuler ultérieurement, et remplace cette première instruction par une instruction d'interception d'activité adaptée pour interrompre la fonction et notifier. Par exemple, on connaît les instructions « VMcall », ou « int3 », qui interrompent l'exécution de la machine virtuelle et envoient une notification à l'hyperviseur.

Dans un autre exemple de supervision, c'est la fin de l'exécution d'une fonction qui est supervisée dans un but de notification de l'hyperviseur. Le traitement de l'interception de fin d'appel est similaire au cas précédent : le module de supervision injecte une ou plusieurs instructions d'interception d'activité au niveau de l'instruction de fin de fonction, et aussi au niveau d'éventuels autres points de sortie de la fonction pour lesquels l'hyperviseur souhaite être notifié. Dans ce cas, les autres points de sortie sont repérés en scannant les instructions comprises entre la première instruction de la fonction et la dernière instruction. Les points de sortie pertinents dans le cadre de la supervision sont alors remplacés par une instruction d'interception d'activité. L'exécution de ces instructions est alors notifiée à l'hyperviseur. Superviser la fin de l'exécution d'une fonction permet de connaître le résultat de la fonction, de le modifier éventuellement, d'ajouter un traitement, etc.

Les étapes d'un deuxième procédé de supervision, selon un exemple de réalisation, vont maintenant être décrites en relation avec la figure 8. Ces étapes sont mises en oeuvre par un module de supervision par injection d'appel. Dans l'exemple décrit ici, le module de supervision par injection d'appel est un module logiciel compris dans l'hyperviseur.

Dans cet exemple de réalisation, l'administrateur de sécurité commande via le module de supervision, l'exécution d'une fonction du noyau du système d'exploitation sur la machine virtuelle. Une telle commande peut être associée à une réaction suite à la détection d'un comportement malveillant sur la machine virtuelle. Dans ce cas, l'administrateur souhaite par exemple commander l'exécution de la fonction « kill ».

Dans une étape E80 de sauvegarde, le module de supervision commande à l'hyperviseur une sauvegarde du contexte du processeur associé à la machine virtuelle. A cet effet, la machine virtuelle est temporairement arrêtée et l'adresse de l'instruction courante, désignée également par « IP » (pour « Instruction Pointer »), et les registres associés au processeur sont sauvegardés.

Dans une étape suivante E81 d'injection, le module de supervision commande l'exécution de la fonction du noyau. A cette fin, il positionne le registre d'instruction, ou IP, à l'adresse de la fonction « kill » qui figure dans la table de fonctions TB_{F} associée à la machine virtuelle. Le module de supervision charge également les paramètres de la fonction « kill » tels que définis par le prototype de la fonction dans des registres appropriés, ou la pile selon le cas.

Dans une étape suivante E82 de reprise, le module de supervision commande la reprise de l'exécution de la machine virtuelle. La fonction du noyau « kill » est alors exécutée. La fonction « kill » retourne un résultat qui est enregistré et analysé par le module de supervision.

Dans une deuxième étape E83 d'arrêt, le module de supervision commande l'arrêt de la machine virtuelle.

Dans une étape suivante E84 de restauration, les registres du processeur de la machine virtuelle sont restaurés à partir des valeurs sauvegardées, et le pointeur d'instruction est positionné à la valeur sauvegardée initialement.

Dans une étape E85 de reprise, le module de supervision commande la reprise de l'exécution de la machine virtuelle.

Ce mode de supervision constitue une supervision active de la machine virtuelle par injection d'appel de fonction.

Dans un autre exemple de réalisation, le module de supervision est adapté pour mettre en oeuvre une supervision passive par injection d'appel de fonction. Par exemple, il est observé à intervalle régulier ce qui se passe au niveau de la machine virtuelle en matière de processus actifs. Dans ce cas, il est prévu à intervalle régulier d'exécuter les fonctions du noyau qui listent les processus actifs.

Un dispositif d'identification d'au moins une fonction d'un noyau d'un système d'exploitation, selon un exemple de réalisation, va maintenant être décrit en relation avec la figure 6.

Le dispositif 60 d'identification d'au moins une fonction d'un noyau d'un système d'exploitation est un équipement informatique tel qu'un serveur hôte, agencé pour héberger au moins une machine virtuelle (non représentée sur la figure 6). Le dispositif 60 d'identification comprend une couche de virtualisation destinée à héberger un hyperviseur 601. Dans un exemple de réalisation, l'hyperviseur comprend un module 602 d'identification des fonctions du noyau d'un système d'exploitation. Le module d'identification 602 comprend des instructions de code pour mettre en oeuvre les étapes du procédé d'identification des fonctions d'un noyau d'un système d'exploitation tel que décrit précédemment. L'hyperviseur 601 est agencé pour virtualiser des ressources matérielles du dispositif 60 afin de fournir à des machines virtuelles qu'il héberge les ressources qui leur sont nécessaires. Le dispositif 60 d'aide à l'analyse de l'exécution d'une machine virtuelle comprend de manière classique :
- un microprocesseur 603, ou « CPU » (de l'anglais « Central Processing Unit »), destiné à charger des instructions en mémoire, à les exécuter, à effectuer des opérations,
- un ensemble de mémoires, dont une mémoire volatile 604, ou « RAM » (pour « Random Access Memory ») utilisée pour exécuter des instructions de code, stocker des variables, etc., et une mémoire de stockage 605 de type « EEPROM » (de l'anglais « Electronically-Erasable Programmable Read-Only Memory). La mémoire de stockage 605 est agencée pour mémoriser une application qui comprend des instructions de code pour mettre en oeuvre les étapes du procédé d'identification des fonctions du noyau d'un système d'exploitation d'au moins une machine virtuelle. En particulier, elle mémorise des instructions de code pour la mise en oeuvre du module 602 d'identification des fonctions de l'hyperviseur 601 dans la couche de virtualisation. Dans un exemple de réalisation, La mémoire de stockage 605 est également agencée pour stocker les tables des fonctions TB_{F}, une table étant associée à une machine virtuelle. Dans un autre exemple de réalisation, elle est également agencée pour stocker la base de référence BDR.
- des interfaces de communication 606, agencées pour que les entités communiquent. En particulier, les interfaces 606 sont adaptées pour faciliter la communication avec les machines virtuelles et leur système d'exploitation. Les interfaces de communication 606 sont également agencées pour accéder à la base de données de référence BDR et aux tables de fonctions TB_{F} des adresses des fonctions du noyau du système d'exploitation des machines virtuelles.

On comprend, au vu de la description et du contexte d'architecture en cloud computing que le microprocesseur 603, les mémoires 604, 605, les interfaces de communication 606 sont des ressources matérielles d'une couche d'exécution matérielle du dispositif 60. Ces ressources sont destinées à être virtualisées par l'hyperviseur 601 et mises à disposition des machines virtuelles sous forme virtualisée.

Le dispositif 60 d'identification d'au moins une fonction d'un noyau d'un système d'exploitation comprend également :
- un module 607 d'identification d'une instruction initiale, agencé pour identifier une instruction initiale I₀ comprise dans une zone mémoire allouée au code du noyau du système d'exploitation de la machine virtuelle.,
- un premier module 608 de localisation, agencé pour localiser au moins un bloc d'instructions suivant compris dans au moins une fonction du noyau du système d'exploitation de la machine virtuelle, ledit bloc suivant étant situé dans une zone mémoire qui suit l'instruction initiale,
- un deuxième module 609 de localisation, agencé pour localiser au moins un bloc d'instructions précédent compris dans au moins une fonction du noyau du système d'exploitation de la machine virtuelle, ledit bloc précédent étant situé dans une zone mémoire qui précède l'instruction initiale,
- un module d'identification 610, agencé pour identifier parmi les au moins un bloc suivant et les au moins un bloc précédent, un premier bloc et un dernier bloc d'instructions de la fonction du noyau du système d'exploitation,
- un module d'enregistrement 611, agencé pour enregistrer une adresse de début de fonction et d'une adresse de fin de fonction en association avec la fonction du noyau du système d'exploitation, l'adresse de début de fonction étant l'adresse de la première instruction du premier bloc et l'adresse de fin de fonction étant l'adresse de la dernière instruction du dernier bloc.

Le module 607 d'identification d'une instruction initiale, le premier module 608 de localisation, le deuxième module 609 de localisation, le module d'identification 610 et le module d'enregistrement 611 sont de préférence des modules logiciels comprenant des instructions logicielles pour faire exécuter les étapes du procédé d'identification des fonctions d'un noyau d'un système d'exploitation précédemment décrit.

L'invention concerne donc aussi :
- un programme d'ordinateur comportant des instructions pour la mise en oeuvre du procédé d'identification des fonctions d'un noyau d'un système d'exploitation tel que décrit précédemment lorsque ce programme est exécuté par un processeur du dispositif d'identification d'au moins une fonction 60,
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

Dans un exemple de réalisation, le dispositif 60 d'identification des fonctions d'un noyau d'un système d'exploitation comprend un module de création de la base de référence (non représenté sur la figure 6). Dans ce cas, le dispositif 60 d'identification d'au moins une fonction d'un noyau comprend également les modules suivants (non représentés sur la figure 6) :
- un premier module d'obtention d'adresse, agencé pour obtenir l'adresse de début d'une première fonction de référence, l'adresse de début de la première fonction de référence étant associée au nom de la première fonction de référence dans une documentation du système d'exploitation, et obtention dans la documentation de l'adresse de début d'une fonction de référence suivante, ,
- un module d'association, agencé pour associer une adresse mémoire précédent l'adresse de début de la deuxième fonction de référence à une adresse de fin de la première fonction de référence,
- un module d'identification, agencé pour identifier, entre l'adresse de début de la première fonction de référence et de l'adresse de fin de la première fonction de référence d'au moins un bloc d'instructions, la dernière instruction dudit bloc étant une instruction de fin de bloc,
- un module de calcul, agencé pour calculer une signature dudit bloc d'instructions identifié,
- un module d'enregistrement, agencé pour enregistrer dans la base de référence de ladite signature du bloc en association avec le nom de la première fonction de référence.

Ces modules sont de préférence des modules logiciels, agencés pour mettre en oeuvre les étapes de la phase d'apprentissage du procédé d'aide à l'analyse de l'exécution d'une machine virtuelle tel que décrit précédemment.

Dans l'exemple de réalisation décrit ici, le module 602 d'identification des fonctions d'un noyau d'un système d'exploitation et le module de création de la base de référence sont compris dans l'hyperviseur 601. Dans un autre exemple de réalisation, ces modules sont distincts de l'hyperviseur 601. Par exemple, des machines virtuelles sont hébergées sur un deuxième serveur hôte et le module 602 d'identification des fonctions d'un noyau d'un système d'exploitation dialogue avec l'hyperviseur du deuxième serveur hôte afin de mettre en oeuvre les étapes du procédé d'identification des fonctions d'un noyau d'un système d'exploitation d'une machine virtuelle telles que décrites précédemment. On rappelle que la phase de création de la base de référence peut être mise en oeuvre indépendamment des machines virtuelles du serveur hôte 60.

### ANNEXE 1

### <sys_getpid> Kernel 3.13.1 :

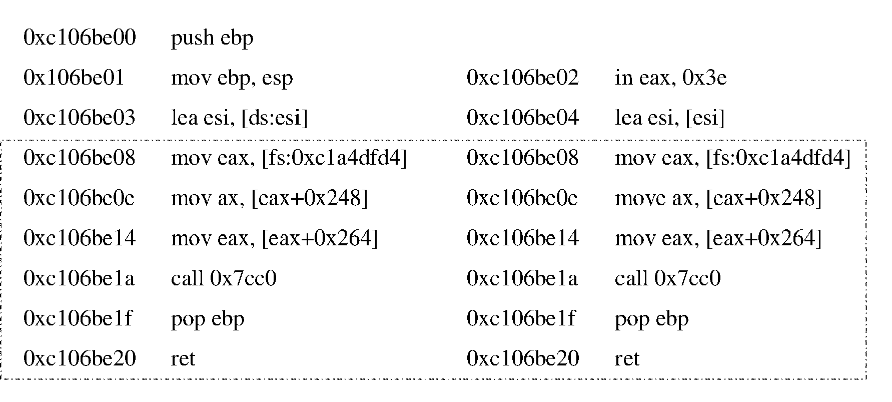

### ANNEXE 2

### TB^{b}:

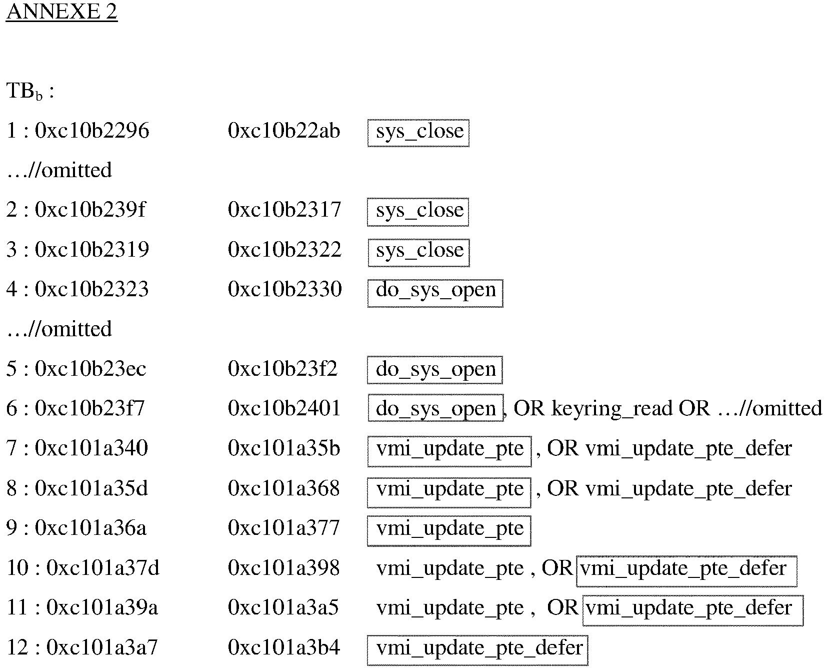

## Revendications

1. Procédé d'identification d'au moins une fonction d'un noyau d'un système d'exploitation d'une machine virtuelle, ladite machine virtuelle comprenant un système d'exploitation communiquant avec un hyperviseur d'un système hôte, ledit hyperviseur s'interfaçant entre le système d'exploitation et des ressources matérielles du système hôte, ledit procédé comprenant les étapes suivantes :
- identification (E10) d'une instruction initiale (I₀) comprise dans le code du noyau du système d'exploitation de la machine virtuelle,
- localisation (E12-E18) en scannant l'espace mémoire, d'au moins un bloc d'instructions suivant appartenant à au moins une fonction du noyau du système d'exploitation de la machine virtuelle, ledit bloc suivant étant situé dans une zone mémoire qui suit l'instruction initiale,
- localisation (E22-E28) en scannant l'espace mémoire et en utilisant un mécanisme d'auto-réparation du désassemblage, d'au moins un bloc d'instructions précédent appartenant à au moins une fonction du noyau du système d'exploitation de la machine virtuelle, ledit bloc précédent étant situé dans une zone mémoire qui précède l'instruction initiale,
- identification (P3) d'un premier bloc et d'un dernier bloc d'instructions de la fonction du noyau du système d'exploitation parmi les au moins un bloc suivant et au moins un bloc précédent, ladite identification consistant à chercher (E27) dans une base de données de référence comprenant l'ensemble des signatures des blocs d'instructions des fonctions du noyau du système d'exploitation, une signature de bloc de l'ensemble étant associée au nom d'une fonction du noyau du système d'exploitation, le nom de la fonction associée aux signatures des premier et dernier blocs d'instructions, et enregistrement d'une adresse de début de fonction et d'une adresse de fin de fonction en association avec la fonction du noyau du système d'exploitation, l'adresse de début de fonction étant l'adresse de la première instruction du premier bloc et l'adresse de fin de fonction étant l'adresse de la dernière instruction du dernier bloc.

2. Procédé d'identification d'au moins une fonction selon la revendication 1, dans lequel l'instruction initiale est identifiée en accédant à un registre spécifique du processeur.

3. Procédé selon l'une des revendications précédentes, dans lequel la localisation d'au moins un bloc suivant, situé dans la zone mémoire qui suit l'instruction initiale, comprend :
- recherche, dans la zone mémoire qui suit l'instruction initiale, d'une instruction courante qui suit une instruction de fin de bloc, ladite instruction courante étant la première instruction du bloc suivant,
- recherche, dans la zone mémoire qui suit la première instruction du bloc suivant, d'une instruction de fin de bloc suivante, ladite instruction de fin de bloc suivante étant la dernière instruction du bloc suivant.

4. Procédé selon l'une des revendications précédentes, dans lequel la localisation d'au moins un bloc précédent, situé dans la zone mémoire qui précède l'instruction initiale comprend :
- recherche, dans la zone mémoire qui précède l'instruction initiale, d'au moins deux instructions de fin de bloc, une première instruction de fin de bloc étant située à une première adresse, une deuxième instruction de fin de bloc étant située à une deuxième adresse, la première adresse étant plus éloignée de l'instruction initiale que la deuxième adresse,
- mise en oeuvre d'un désassemblage sur des instructions qui suivent la première adresse,
- lorsqu'une instruction obtenue par désassemblage depuis la première adresse et figurant à la deuxième adresse correspond à la deuxième instruction de fin de bloc, sélection de l'instruction qui suit la deuxième instruction de fin de bloc, ladite instruction qui suit la deuxième instruction de fin de bloc correspondant à la première instruction du au moins un bloc précédent,
- recherche dans la zone de mémoire qui suit la première instruction du au moins un bloc précédent d'une autre instruction de fin de bloc, ladite autre instruction de fin de bloc correspondant à la dernière instruction du au moins un bloc précédent.

5. Procédé selon l'une des revendications précédentes, dans lequel l'identification d'un premier bloc et d'un dernier bloc d'instructions de la fonction du noyau comprend :
- calcul (E16, E26) pour chacun des au moins un bloc suivant et au moins un bloc précédent d'une signature des instructions du bloc,
- recherche (E17, E27) de ladite signature dans une base de référence de signatures de blocs (BDR), ladite base de référence comprenant pour au moins un système d'exploitation de référence, les signatures des instructions des blocs qui font partie des fonctions de référence du noyau dudit système d'exploitation, une signature des instructions d'un bloc de la base étant associée au nom d'au moins une fonction de référence du noyau qui comprend ledit bloc,
- classement (P3) des au moins un bloc suivant et au moins un bloc précédent selon une adresse de bloc, et regroupement de blocs successifs et identification de la fonction du noyau qui comprend ledit regroupement de blocs, un premier bloc du regroupement correspondant au premier bloc de la fonction du noyau et un dernier bloc du regroupement correspondant au dernier bloc de la fonction du noyau.

6. Procédé selon la revendication 1 comprenant, dans une phase de construction de la base de référence de signatures des blocs qui font partie des fonctions de référence d'au moins un système d'exploitation de référence, les étapes suivantes :
- obtention (E50) de l'adresse de début d'une première fonction de référence, l'adresse de début de la première fonction de référence étant associée au nom de la première fonction de référence dans une documentation du système d'exploitation, et obtention dans la documentation de l'adresse de début d'une fonction de référence suivante,
- association (E51) d'une adresse mémoire précédant l'adresse de début de la fonction de référence suivante à une adresse de fin de la première fonction de référence,
- identification (E52) entre l'adresse de début de la première fonction de référence et de l'adresse de fin de la première fonction de référence d'au moins un bloc d'instructions, la dernière instruction dudit bloc étant une instruction de fin de bloc,
- calcul (E53) d'une signature dudit bloc d'instructions identifié,
- enregistrement (E54) dans la base de référence de ladite signature du bloc en association avec le nom de la première fonction de référence.

7. Utilisation du procédé d'identification d'au moins une fonction d'un noyau, selon l'une des revendications 1 à 5 par un module de supervision de l'exécution d'une machine virtuelle, ledit module de supervision commandant à l'hyperviseur d'injecter dans la machine virtuelle l'appel de la fonction du noyau identifiée.

8. Utilisation du procédé d'identification d'au moins une fonction d'un noyau, selon l'une des revendications 1 à 5 par un module de supervision de l'exécution d'une machine virtuelle, ledit module de supervision commandant à l'hyperviseur de positionner des bits associés au caractère exécutable de la fonction du noyau identifiée à non exécutable de manière à recevoir une notification lors de l'exécution de ladite fonction par la machine virtuelle.

9. Utilisation du procédé d'identification d'au moins une fonction d'un noyau, selon l'une des revendications 1 à 5 par un module de supervision de l'exécution d'une machine virtuelle, ledit module de supervision commandant à l'hyperviseur d'injecter une instruction d'interception d'activité dans le code de la fonction du noyau identifiée de manière à recevoir une notification lors de l'exécution de ladite fonction par la machine virtuelle.

10. Utilisation du procédé d'identification d'au moins une fonction d'un noyau, selon l'une des revendications 1 à 5 par un module de supervision de l'exécution d'une machine virtuelle, ledit module de supervision commandant à l'hyperviseur d'injecter une instruction d'interception d'activité dans le code de la fonction du noyau identifiée de manière à recevoir une notification lors de la fin de l'exécution de ladite fonction par la machine virtuelle.

11. Dispositif (60) d'identification d'au moins une fonction d'un noyau d'un système d'exploitation d'une machine virtuelle, ladite machine virtuelle comprenant un système d'exploitation communiquant avec un hyperviseur (601) du serveur, ledit hyperviseur s'interfaçant entre le système d'exploitation et des ressources matérielles du serveur, ledit serveur comprenant :
- des moyens (607) d'identification d'une instruction initiale, agencés pour identifier une instruction initiale (I₀) comprise dans le code du noyau du système d'exploitation de la machine virtuelle,
- des premiers moyens de localisation (608), agencés pour localiser en scannant l'espace mémoire au moins un bloc d'instructions suivant compris dans au moins une fonction du noyau du système d'exploitation de la machine virtuelle, ledit bloc suivant étant situé dans une zone mémoire qui suit l'instruction initiale,
- des deuxièmes moyens de localisation (609), agencés pour localiser en scannant l'espace mémoire et en utilisant un mécanisme d'auto-réparation du désassemblage, au moins un bloc d'instructions précédent compris dans au moins une fonction du noyau du système d'exploitation de la machine virtuelle, ledit bloc précédent étant situé dans une zone mémoire qui précède l'instruction initiale,
- des moyens d'identification (610), agencés pour identifier, parmi les au moins un bloc suivant et au moins un bloc précédent, un premier bloc et un dernier bloc d'instructions qui composent la fonction du noyau du système d'exploitation, ladite identification consistant à chercher dans une base de données de référence comprenant l'ensemble des signatures des blocs d'instructions des fonctions du noyau du système d'exploitation, une signature de bloc de l'ensemble étant associée au nom d'une fonction du noyau du système d'exploitation, le nom de la fonction associée aux signatures des premier et dernier blocs d'instructions,
- des moyens d'enregistrement (611), agencés pour enregistrer une adresse de début de fonction et une adresse de fin de fonction en association avec la fonction du noyau du système d'exploitation, l'adresse de début de fonction étant l'adresse de la première instruction du premier bloc et l'adresse de fin de fonction étant l'adresse de la dernière instruction du dernier bloc.

12. Programme d'ordinateur sur un support de données et chargeable dans la mémoire d'un ordinateur, le programme comprenant des portions de code pour l'exécution des étapes du procédé d'identification des fonctions d'un noyau d'un système d'exploitation d'une machine virtuelle selon l'une quelconque des revendications 1 à 6, lorsque le programme est exécuté sur ledit ordinateur.

13. Support de données dans lequel est enregistré le programme selon la revendication 12.

## Patentansprüche

1. Verfahren zur Identifizierung mindestens einer Kernel-Funktion eines Betriebssystems einer virtuellen Maschine, wobei die virtuelle Maschine ein Betriebssystem umfasst, das mit einem Hypervisor eines Host-Systems kommuniziert, wobei der Hypervisor eine Schnittstelle zwischen dem Betriebssystem und den Hardware-Ressourcen des Host-Systems bildet, wobei das Verfahren die folgenden Schritte umfasst:
- Identifizieren (E10) einer ersten Anweisung (I₀), die im Kernel-Code des Betriebssystems der virtuellen Maschine enthalten ist,
- Lokalisieren (E12-E18) mindestens eines nachfolgenden Anweisungsblocks, der zu mindestens einer Kernel-Funktion des Betriebssystems der virtuellen Maschine gehört, durch Abtasten des Speicherraums, wobei sich der nachfolgende Block in einem Speicherbereich befindet, der der ersten Anweisung folgt,
- Lokalisieren (E22-E28) mindestens eines vorhergehenden Anweisungsblocks, der zu mindestens einer Kernel-Funktion des Betriebssystems der virtuellen Maschine gehört, durch Abtasten des Speicherraums und durch Verwenden eines Mechanismus der Selbstreparatur der Zerlegung, wobei sich der vorhergehende Block in einem Speicherbereich befindet, der der ersten Anweisung vorhergeht,
- Identifizieren (P3) eines ersten Blocks und eines letzten Blocks von Anweisungen der Kernel-Funktion des Betriebssystems aus dem mindestens einen nachfolgenden Block und dem mindestens einen vorhergehenden Block, wobei das Identifizieren darin besteht, in einer Referenzdatenbank, die die Gesamtheit der Signaturen der Anweisungsblöcke der Kernel-Funktionen des Betriebssystems umfasst, eine Blocksignatur aus der Gesamtheit zu suchen (E27), die mit dem Namen einer Kernel-Funktion des Betriebssystems verknüpft ist, wobei der Name der Funktion mit der Signatur des ersten und des letzten Anweisungsblocks verknüpft ist, und Speichern einer Adresse des Funktionsanfangs und einer Adresse des Funktionsendes in Verknüpfung mit der Kernel-Funktion des Betriebssystems, wobei die Adresse des Funktionsanfangs die Adresse der ersten Anweisung des ersten Blocks und die Adresse des Funktionsendes die Adresse der letzten Anweisung des letzten Blocks ist.

2. Verfahren zur Identifizierung mindestens einer Funktion nach Anspruch 1, wobei die erste Anweisung durch Zugreifen auf ein bestimmtes Register des Prozessors identifiziert wird.

3. Verfahren nach einem der vorhergehenden Ansprüche, wobei das Lokalisieren mindestens eines nachfolgenden Blocks, der sich in dem Speicherbereich befindet, der der ersten Anweisung nachfolgt, umfasst:
- Suchen einer aktuellen Anweisung, die einer Blockende-Anweisung nachfolgt, in dem Speicherbereich, der der ersten Anweisung nachfolgt, wobei die aktuelle Anweisung die erste Anweisung des nachfolgenden Blocks ist,
- Suchen einer nachfolgenden Blockende-Anweisung in dem Speicherbereich, der der ersten Anweisung des nachfolgenden Blocks nachfolgt, wobei die nachfolgende Blockende-Anweisung die letzte Anweisung des nachfolgenden Blocks ist.

4. Verfahren nach einem der vorhergehenden Ansprüche, wobei das Lokalisieren mindestens eines vorhergehenden Blocks, der sich in dem Speicherbereich befindet, der der ersten Anweisung vorhergeht, umfasst:
- Suchen von mindestens zwei Blockende-Anweisungen in dem Speicherbereich, der der ersten Anweisung vorhergeht, wobei sich eine erste Blockende-Anweisung an einer ersten Adresse befindet, sich eine zweite Blockende-Anweisung an einer zweiten Adresse befindet, wobei die erste Adresse von der ersten Anweisung weiter entfernt ist als die zweite Adresse,
- Durchführen einer Zerlegung an Anweisungen, die der ersten Adresse nachfolgen,
- wenn eine Anweisung, die durch Zerlegen ab der ersten Adresse gewonnen wird und an der zweiten Adresse steht, der zweiten Blockende-Anweisung entspricht, Auswählen der Anweisung, die der zweiten Blockende-Anweisung nachfolgt, wobei die Anweisung, die der zweiten Blockende-Anweisung nachfolgt, der ersten Anweisung des mindestens einen vorhergehenden Blocks entspricht,
- Suchen einer anderen Blockende-Anweisung in dem Speicherbereich, in dem Speicherbereich, der der ersten Anweisung des mindestens einen vorhergehenden Blocks nachfolgt, wobei die andere Blockende-Anweisung der letzten Anweisung des mindestens einen vorhergehenden Blocks entspricht.

5. Verfahren nach einem der vorhergehenden Ansprüche, wobei das Identifizieren eines ersten und eines letzten Anweisungsblocks der Kernel-Funktion umfasst:
- Berechnen (E16, E26) einer Signatur der Blockanweisungen für jeden des mindestens einen nachfolgenden Blocks und des mindestens einen vorhergehenden Blocks,
- Suchen (E17, E27) der Signatur in einer Referenzbank für Blocksignaturen (BDR), wobei die Referenzbank für mindestens ein Referenzbetriebssystem die Signaturen der Blockanweisungen umfasst, die Teil der Referenzfunktionen des Kernels des Betriebssystems sind, wobei eine Signatur der Anweisungen eines Blocks der Bank mit dem Namen mindestens einer Referenzfunktion des Kernels verknüpft ist, der den Block umfasst,
- Klassifizieren (P3) des mindestens einen nachfolgenden Blocks und des mindestens einen vorhergehenden Blocks nach einer Blockadresse und Umgruppieren aufeinanderfolgender Blöcke und Identifizieren der Kernel-Funktion, die die Umgruppierung der Blöcke umfasst, wobei ein erster Block der Umgruppierung dem ersten Block der Kernel-Funktion und einem letzten Block der Umgruppierung, der dem letzten Block der Kernel-Funktion entspricht, entspricht.

6. Verfahren nach Anspruch 1, das in einer Aufbauphase der Referenzbank für Blocksignaturen, die Teil der Referenzfunktionen mindestens eines Referenzbetriebssystem sind, die folgenden Schritte umfasst:
- Erhalten (E50) der Adresse des Anfangs einer ersten Referenzfunktion, wobei die Adresse des Anfangs der ersten Referenzfunktion mit dem Namen der ersten Referenzfunktion in einer Dokumentation des Betriebssystems verknüpft ist, und Erhalten der Adresse des Anfangs einer nachfolgenden Referenzfunktion in der Dokumentation,
- Verknüpfen (E51) einer Speicheradresse, die der Adresse des Anfangs der nachfolgenden Referenzfunktion vorhergeht, mit einer Adresse des Endes der ersten Referenzfunktion,
- Identifizieren (E52) mindestens eines Anweisungsblocks aus der Adresse des Anfangs der ersten Referenzfunktion und der Adresse des Endes der ersten Referenzfunktion, wobei die letzte Anweisung des Blocks eine Blockende-Anweisung ist,
- Berechnen (E53) einer Signatur des identifizierten Anweisungsblocks,
- Speichern (E54) der Signatur des Blocks in Verknüpfung mit dem Namen der ersten Referenzfunktion in der Referenzbank.

7. Verwendung des Prozesses zur Identifizierung mindestens einer Kernel-Funktion nach einem der Ansprüche 1 bis 5 durch ein Modul zur Überwachung der Ausführung einer virtuellen Maschine, wobei das Überwachungsmodul dem Hypervisor befiehlt, in die virtuelle Maschine den Aufruf der identifizierten Kernel-Funktion zu injizieren.

8. Verwendung eines Prozesses zur Identifizierung mindestens einer Kernel-Funktion nach einem der Ansprüche 1 bis 5 durch ein Modul zur Überwachung der Ausführung einer virtuellen Maschine, wobei das Überwachungsmodul dem Hypervisor befiehlt, Bits, die mit dem ausführbaren Wesen der identifizierten Kernel-Funktion verknüpft sind, auf nichtausführbar zu setzen, so dass bei Ausführung der Funktion durch die virtuelle Maschine eine Meldung empfangen wird.

9. Verwendung des Prozesses zur Identifizierung mindestens einer Kernel-Funktion nach einem der Ansprüche 1 bis 5 durch ein Modul zur Überwachung der Ausführung einer virtuellen Maschine, wobei das Überwachungsmodul dem Hypervisor befiehlt, eine Anweisung zum Abfangen einer Aktivität in den Code der identifizierten Kernel-Funktion zu injizieren, so dass bei Ausführung der Funktion durch die virtuelle Maschine eine Meldung empfangen wird.

10. Verwendung des Prozesses zur Identifizierung mindestens einer Kernel-Funktion nach einem der Ansprüche 1 bis 5 durch ein Modul zur Überwachung der Ausführung einer virtuellen Maschine, wobei das Überwachungsmodul dem Hypervisor befiehlt, eine Anweisung zum Abfangen einer Aktivität in den Code der identifizierten Kernel-Funktion zu injizieren, so dass bei Ende der Ausführung der Funktion durch die virtuelle Maschine eine Meldung empfangen wird.

11. Vorrichtung (60) zur Identifizierung mindestens einer Kernel-Funktion eines Betriebssystems einer virtuellen Maschine, wobei die virtuelle Maschine ein Betriebssystem umfasst, das mit einem Hypervisor (601) des Servers kommuniziert, wobei der Hypervisor eine Schnittstelle zwischen dem Betriebssystem und den Hardware-Ressourcen des Servers bildet, wobei der Server umfasst:
- Mittel (607) zum Identifizieren einer ersten Anweisung, die dazu eingerichtet sind, eine erste Anweisung (I₀), die im Kernel-Code des Betriebssystems der virtuellen Maschine enthalten ist, zu identifizieren,
- erste Mittel zum Lokalisieren (608), die dazu eingerichtet sind, mindestens einen nachfolgenden Anweisungsblock, der in mindestens einer Kernel-Funktion des Betriebssystems der virtuellen Maschine enthalten ist, durch Abtasten des Speicherraums zu lokalisieren, wobei sich der nachfolgende Block in einem Speicherbereich befindet, der der ersten Anweisung nachfolgt,
- zweite Mittel zum Lokalisieren (609), die dazu eingerichtet sind, mindestens einen vorhergehenden Anweisungsblock, der in mindestens einer Kernel-Funktion des Betriebssystems der virtuellen Maschine enthalten ist, durch Abtasten des Speicherraums und durch Verwenden eines Mechanismus der Selbstreparatur der Zerlegung zu lokalisieren, wobei sich der vorhergehende Block in einem Speicherbereich befindet, der der ersten Anweisung vorhergeht,
- Mittel zum Identifizieren (610), die dazu eingerichtet sind, einen ersten Block und einen letzten Block von Anweisungen, die die Kernel-Funktion des Betriebssystems bilden, aus dem mindestens einen nachfolgenden Block und dem mindestens einen vorhergehenden Block zu identifizieren, wobei das Identifizieren darin besteht, in einer Referenzdatenbank, die die Gesamtheit der Signaturen der Anweisungsblöcke der Kernel-Funktionen des Betriebssystems umfasst, eine Blocksignatur aus der Gesamtheit zu suchen, die mit dem Namen einer Kernel-Funktion des Betriebssystems verknüpft ist, wobei der Name der Funktion mit der Signatur des ersten und des letzten Anweisungsblocks verknüpft ist,
- Mittel zum Speichern (611), die dazu eingerichtet sind, eine Adresse des Funktionsanfangs und eine Adresse des Funktionsendes in Verknüpfung mit der Kernel-Funktion des Betriebssystems zu speichern, wobei die Adresse des Funktionsanfangs die Adresse der ersten Anweisung des ersten Blocks und die Adresse des Funktionsendes die Adresse der letzten Anweisung des letzten Blocks ist.

12. Computerprogramm auf einem Datenträger und in den Speicher eines Computers ladbar, wobei das Programm Codeteile zur Ausführung der Schritte des Verfahrens zur Identifizierung von Kernel-Funktionen eines Betriebssystems einer virtuellen Maschine nach einem der Ansprüche 1 bis 6 umfasst, wenn das Programm auf dem Computer ausgeführt wird.

13. Datenträger, auf dem das Programm nach Anspruch 12 gespeichert ist.

## Claims

1. Method for identifying at least one function of a kernel of an operating system of a virtual machine, said virtual machine comprising an operating system communicating with a hypervisor of a host system, said hypervisor interfacing between the operating system and hardware resources of the host system, said method comprising the following steps:
- identifying (E10) an initial instruction (I₀) contained in the code of the kernel of the operating system of the virtual machine,
- locating (E12-E18), by scanning the memory space, at least one following block of instructions belonging to at least one function of the kernel of the operating system of the virtual machine, said following block being situated in a memory area which follows the initial instruction,
- locating (E22-E28), by scanning the memory space and by using a self-repairing disassembly mechanism, at least one preceding block of instructions belonging to at least one function of the kernel of the operating system of the virtual machine, said preceding block being situated in a memory area which precedes the initial instruction,
- identifying (P3) a first block and a last block of instructions of the function of the kernel of the operating system from among the at least one following block and at least one preceding block, said identification consisting in searching (E27), in a reference database comprising the set of signatures of the blocks of instructions of the functions of the kernel of the operating system, a block signature in the set being associated with the name of a function of the kernel of the operating system, for the name of the function associated with the signatures of the first and last blocks of instructions, and recording a function start address and a function end address in association with the function of the kernel of the operating system, the function start address being the address of the first instruction of the first block and the function end address being the address of the last instruction of the last block.

2. Method for identifying at least one function according to Claim 1, in which the initial instruction is identified by accessing a specific register of the processor.

3. Method according to one of the preceding claims, in which locating at least one following block, situated in the memory area which follows the initial instruction, comprises:
- searching, in the memory area which follows the initial instruction, for a current instruction which follows a block end instruction, said current instruction being the first instruction of the following block,
- searching, in the memory area which follows the first instruction of the following block, for a following block end instruction, said following block end instruction being the last instruction of the following block.

4. Method according to one of the preceding claims, in which locating at least one preceding block, situated in the memory area which precedes the initial instruction, comprises:
- searching, in the memory area which precedes the initial instruction, for at least two block end instructions, a first block end instruction being situated at a first address, a second block end instruction being situated at a second address, the first address being further from the initial instruction than the second address,
- implementing disassembly on instructions which follow the first address,
- when an instruction obtained through disassembly from the first address and appearing in the second address corresponds to the second block end instruction, selecting the instruction which follows the second block end instruction, said instruction which follows the second block end instruction corresponding to the first instruction of the at least one preceding block,
- searching, in the memory area which follows the first instruction of the at least one preceding block, for another block end instruction, said other block end instruction corresponding to the last instruction of the at least one preceding block.

5. Method according to one of the preceding claims, in which identifying a first block and a last block of instructions of the function of the kernel comprises:
- calculating (E16, E26), for each of the at least one following block and at least one preceding block, a signature of the instructions of the block,
- searching (E17, E27) for said signature in a reference database of block signatures (BDR), said reference database comprising, for at least one reference operating system, the signatures of the instructions of the blocks which form part of the reference functions of the kernel of said operating system, a signature of the instructions of a block of the database being associated with the name of at least one reference function of the kernel which comprises said block,
- classifying (P3) the at least one following block and at least one preceding block according to a block address, and grouping successive blocks and identifying the function of the kernel which comprises said group of blocks, a first block of the group corresponding to the first block of the function of the kernel and a last block of the group corresponding to the last block of the function of the kernel.

6. Method according to Claim 1, comprising, in a phase of constructing the reference database of signatures of the blocks which form part of the reference functions of at least one reference operating system, the following steps:
- obtaining (E50) the start address of a first reference function, the start address of the first reference function being associated with the name of the first reference function in documentation of the operating system, and obtaining, from the documentation, the start address of a following reference function,
- associating (E51) a memory address preceding the start address of the following reference function with an end address of the first reference function,
- identifying (E52), between the start address of the first reference function and the end address of the first reference function, at least one block of instructions, the last instruction of said block being a block end instruction,
- calculating (E53) a signature of said identified block of instructions,
- recording (E54), in the reference database, said signature of the block in association with the name of the first reference function.

7. Use of the method for identifying at least one function of a kernel, according to one of Claims 1 to 5, by a module for supervising the execution of a virtual machine, said supervision module commanding the hypervisor to inject, into the virtual machine, the call of the identified function of the kernel.

8. Use of the method for identifying at least one function of a kernel, according to one of Claims 1 to 5, by a module for supervising the execution of a virtual machine, said supervision module commanding the hypervisor to position bits associated with the executable nature of the identified function of the kernel at non-executable so as to receive a notification when said function is executed by the virtual machine.

9. Use of the method for identifying at least one function of a kernel, according to one of Claims 1 to 5, by a module for supervising the execution of a virtual machine, said supervision module commanding the hypervisor to inject an activity interception instruction into the code of the identified function of the kernel so as to receive a notification upon the execution of said function by the virtual machine.

10. Use of the method for identifying at least one function of a kernel, according to one of Claims 1 to 5, by a module for supervising the execution of a virtual machine, said supervision module commanding the hypervisor to inject an activity interception instruction into the code of the identified function of the kernel so as to receive a notification at the end of the execution of said function by the virtual machine.

11. Device (60) for identifying at least one function of a kernel of an operating system of a virtual machine, said virtual machine comprising an operating system communicating with a hypervisor (601) of the server, said hypervisor interfacing between the operating system and hardware resources of the server, said server comprising:
- means (607) for identifying an initial instruction, designed to identify an initial instruction (I₀) contained in the code of the kernel of the operating system of the virtual machine,
- first location means (608), designed to locate, by scanning the memory space, at least one following block of instructions contained in at least one function of the kernel of the operating system of the virtual machine, said following block being situated in a memory area which follows the initial instruction,
- second location means (609), designed to locate, by scanning the memory space and by using a self-repairing disassembly mechanism, at least one preceding block of instructions contained in at least one function of the kernel of the operating system of the virtual machine, said preceding block being situated in a memory area which precedes the initial instruction,
- identification means (610), designed to identify, from among the at least one following block and at least one preceding block, a first block and a last block of instructions which form the function of the kernel of the operating system, said identification consisting in searching, in a reference database comprising the set of signatures of the blocks of instructions of the functions of the kernel of the operating system, a block signature in the set being associated with the name of a function of the kernel of the operating system, for the name of the function associated with the signatures of the first and last blocks of instructions,
- recording means (611), designed to record a function start address and a function end address in association with the function of the kernel of the operating system, the function start address being the address of the first instruction of the first block and the function end address being the address of the last instruction of the last block.

12. Computer program on a data medium which can be loaded into the memory of a computer, the program comprising portions of code for executing the steps of the method for identifying the functions of a kernel of an operating system of a virtual machine according to any one of Claims 1 to 6, when the program is executed on said computer.

13. Data medium on which the program according to Claim 12 is recorded.
